# EUROPÄISCHE PATENTSCHRIFT

(11) **EP 1 399 237 B1**
(45) Veröffentlichungstag und Bekanntmachung des Hinweises auf die Patenterteilung: **23.09.2009**
(21) Anmeldenummer: 01955305.6
(22) Anmeldetag: 12.06.2001
(51) Int. Cl.: B01D 33/067

(54) **DREHFILTERANLAGE**
ROTATING FILTER SYSTEM
DISPOSITIF DE FILTRE ROTATIF

(43) Veröffentlichungstag der Anmeldung: 24.03.2004
(73) Patentinhaber: BHS-Sonthofen GmbH, 87527 Sonthofen (DE)
(72) Erfinder: SÜSS, W., BHS-Sonthofen Maschi.- Anlagenbau GmbH, 87527 Sonthofen (DE); SCHMID, H., BHS-Sonthofen Maschi.- Anlagenbau GmbH, 87527 Sonthofen (DE); STEIDL, D., BHS-Sonthofen Maschi.- Anlagenbau GmbH, 87527 Sonthofen (DE); MAURER, J., BHS-Sonthofen Maschi.- Anlagenbau GmbH, 87527 Sonthofen (DE); TICHY, J., BHS-Sonthofen Maschi.- Anlagenbau GmbH, 87527 Sonthofen (DE)
(74) Vertreter: Herzog, Markus
(86) Internationale Anmeldenummer: PCT/EP2001/006654
(87) Internationale Veröffentlichungsnummer: WO 2002/100512

(56) Entgegenhaltungen:
- AT-B- 362 394
- DE-C- 878 795
- US-A- 5 055 205

## Beschreibung

Die Erfindung betrifft eine Drehfilteranlage, umfassend ein Filtergehäuse mit einer Gehäusemanteleinheit,einen um eine Rotorachse drehbaren, innerhalb des Filtergehäuses aufgenommenen Filterrotor mit einer Rotormanteleinheit,einen Zwischenraum zwischen der Rotormanteleinheit und der Gehäusemanteleinheit, wobei die Rotormanteleinheit eine Mehrzahl von in Umfangsrichtung aufeinander folgenden Filterzellen oder Filterzellengruppen aufweist,wobei weiter in einzelnen Filterzellen jeweils ein zum Zwischenraum hin sich öffnender Zuführungsraum durch ein Filtermittel von einem mit dem Filterrotor umlaufenden Abführleitungssystem getrennt ist, dem seinerseits über eine Drehverbindungsbaugruppe ein stationäres Abführleitungssystem nachgeschaltet ist,wobei weiter der Zwischenraum durch Zonentrennmittel in eine Mehrzahl von in Umfangsrichtung aufeinander folgende Zwischenraumzonen unterteilt ist, welche bei Umlauf des Filterrotors nacheinander mit verschiedenen Filterzellen oder Filterzellengruppen in Verbindung kommen und mindestens z.T. in Verbindung mit einem stationären Zuführleitungssystem stehen, so dass mindestens eine stationäre Zuführleitung des stationären Zuführleitungssystems über eine ihr zugehörige stationäre Zwischenraumzone und jeweils mindestens eine der nacheinander an dieser Zwischenraumzone vorbeiwandernden Filterzellen oder Filterzellengruppen und den einzelnen Filterzellen bzw. Filterzellengruppen jeweils zugeordnete, umlaufende Abführleitungen des umlaufenden Abführleitungssystems in Verbindung mit einer dieser stationären Zuführleitung zugeordneten stationären Abführleitung des stationären Abführleitungssystems steht, wobei weiter der Filterrotor durch eine Rotorlagerung gelagert und diese Rotorlagerung durch eine Rotorlagerabstützung stationär abgestützt ist, wobei weiter der Filterrotor von einem Antriebsmotor her über eine Getriebeeinheit antreibbar ist, welche ein im wesentlich koaxial zum Filterrotor angeordnetes und mit dem Filterrotor zur gemeinsamen Drehung um die Rotorachse verbundenes Abtriebsglied aufweist.

Insbesondere handelt es sich bei der Erfindung um Drehfilteranlagen, bei denen für den Filtervorgang in dem Zwischenraum ein Druck auf das Filtriergut, beispielsweise eine zu filtrierende Suspension, aufgebaut wird, beispielsweise durch hydrostatischen Zuführdruck oder durch zusätzliche Druckgaszuführung oder durch Pumpen, und bei dem durch die Filterzellen hindurch das Filtrat über das umlaufende Abführleitungssystem, die Drehverbindungsbaugruppe und schließlich durch das stationäre Abführleitungssystem abgeführt wird. In ähnlicher Weise kann der Durchfluss eines oder mehrerer Waschmedien, beispielsweise einer Waschflüssigkeit, oder eines Trockengases oder dgl. erfolgen.

Eine Filteranlage dieser Bauart ist z.B. aus der DE-PS 878 795 und aus der Druckschrift BHS-FEST-Druckfilter mit dem Druckvermerk h-2/2-94 bekannt. Es ist bei solchen Anlagen auch möglich, dass zur Durchführung oder Unterstützung des Filtervorgangs über das stationäre Abführleitungssystem, die Drehverbindungsbaugruppe und das umlaufende Abführleitungssystem an die stromabwärtige Seite der Filtermittel ein Unterdruck angelegt wird.

Bei der bekannten Drehfilteranlage nach DE-PS 878 795 ist der Filterrotor durch Hohlwellen in Hohlwellenlagerungen gelagert, die ihrerseits durch Stützen stationär und gesondert von der Abstützung des Filtergehäuses abgestützt sind. An einer der Hohlwellen, d.h. am einen Ende der Drehfilteranlage ist die Drehverbindungsbaugruppe angeordnet, am anderen Ende der Drehfilteranlage ist auf der anderen Hohlwelle das große Zahnrad eines Stirnradgetriebes angeordnet. Dieses große Zahnrad wird durch ein Ritzel angetrieben, das gesondert gelagert ist. Durch den Verzahnungseingriff zwischen dem Ritzel und dem großen Zahnrad wird nicht nur ein Drehmoment übertragen; es entstehen vielmehr auch erhebliche Radialkräfte, die von der Lagerung der zugehörigen Hohlwelle nicht immer vollständig aufgenommen werden, so dass Deformationskräfte in den Filterrotor eingeleitet werden, die zu Spannungspitzen in der Konstruktion des Filterrotors führen können. Es ist deshalb notwendig, den Filterrotor sehr stabil zu bauen, damit er den Drücken in dem Zwischenraum standhalten kann. Anders ausgedrückt, wenn der Filterrotor, was aus Kostengründen erwünscht ist, in einer leichten Konstruktion hergestellt wird, so sind die Drücke, die in dem Zwischenraum aufgebaut werden können, limitiert, um schädliche Spannungsspitzen an dem Filterrotor zu verhindern. Dies bedeutet, dass die Durchsatzleistung der Drehfilteranlage begrenzt ist.

Bei der aus der Druckschrift BHS-FEST-Druckfilter h-2/2-94 bekannten Bauart einer Druckfilteranlage ist der Druckfilterrotor mittels zweier Hohlwellen durch Gleitlager in Lagerschilden gelagert, welche an dem Filtergehäuse angeflanscht sind. An der einen Hohlwelle ist der Kernteil einer Drehverbindungsbaugruppe angeordnet, auf der anderen Hohlwelle, d.h. nahe dem anderen Ende des Filtergehäuses ist das Großrad eines Stirnradgetriebes angeordnet. Durch den Eingriff eines treibenden Ritzels mit diesem Großrad werden neben dem Drehmoment in die tragende Welle auch Radialkräfte eingeleitet, die sowohl die Filtertrommel als auch das Filtergehäuse belasten, welches über das Lagerschild die Abstützung für das zugehörige Gleitlager darstellt. Es muss also auch bei dieser Ausführungsform damit gerechnet werden, dass zusätzliche Spannungen in die Filtertrommel und in das Filtergehäuse eingeleitet werden, d.h. zusätzlich zu den Spannungen, die auf den Betriebsdruck und die Betriebstemperatur zurückzuführen sind. Damit können Spannungspitzen entstehen, die weit über den durch Betriebsdruck und Betriebstemperatur notwendigerweise entstehenden Spannungen liegen. Wegen der Gefahr des Auftretens solcher Spannungsspitzen müssen der Betriebsdruck und die Betriebstemperatur beschränkt werden.

Ferner ist aus der US-A-5,055,205 eine Drehfilteranlage bekannt, welche ein Filtergehäuse mit einer Gehäusemanteleinheit und einen um eine Rotorachse drehbaren Filterrotor innerhalb des Filtergehäuses umfasst, wobei der Filterrotor über ein Riemengetriebe von einem Elektromotor angetrieben wird. Sowohl der Elektromotor als auch das Riemengetriebe sind an einer Stirnseite des Filtergehäuses montiert.

Zur weiteren Illustration des fachlichen Hintergrunds von Drehfilteranlagen kann ferner auf die AT-B-362394 verwiesen werden, welche eine Drehfilteranlage mit einem Filtergehäuse und einer um eine Rotorachse drehbaren, innerhalb des Filtergehäuses aufgenommenen Filterrotor aufweist, wobei der Rotor aus einem Innenrotor und einem Außenrotor gebildet ist, welche konzentrisch zueinander angeordnet und durch separate Elektromotoren unabhängig voneinander angetrieben werden können. Die Motoren sind jeweils am Filtergehäuse montiert.

Der Erfindung liegt neben anderen Problemen das Problem zugrunde, die Filterleistung zu erhöhen, ohne die Konstruktion des Filterrotors und des Filtergehäuses wesentlich zu verstärken.

Zur Lösung dieser Aufgabe ist die Anwendung mindestens einer der folgenden zwei Merkmalsgruppen vorgesehen:
a) das Abtriebsglied der Getriebeeinheit ist in einer zusätzlichen Lagerung, im folgenden genannt "Abtriebsgliedlagerung", gelagert, welche durch eine von der Rotortagerabstützung gesonderte Abtriebsgliedlagerabstützung stationär abgestützt ist;
b) das Abtriebsglied wird von einer Gruppe von -treibenden Rädern angetrieben, welche derart über den Umfang des Abtriebsglieds verteilt sind, dass die Radialkomponenten der von diesen treibenden Rädern auf das Abtriebsglied übertragenen Kräfte sich wenigstens teilweise aufheben.

Durch Anwendung der Merkmalsgruppe a) kann erreicht werden, dass Radialkräfte auf das Abtriebsglied, die beispielsweise durch den Zahneingriff zwischen dem Ritzel und dem großen Zahnrad entstehen, von der Abtriebsgliedlagerung aufgenommen und durch die Abtriebsgliedlagerabstützung abgetragen werden, ohne dass diese Abstützkräfte den Weg über den Filterrotor oder das Filtergehäuse nehmen können. Damit sind sowohl im Filterrotor als.auch im Filtergehäuse Spannungsspitzen vermieden, die durch Radialkräfte im Antrieb und durch gleichzeitige Druck-und/oder Temperatureinwirkung auf Filtergehäuse und Filterrotor sich aufbauen könnten. Der Wegfall schädlicher Einflüsse aus den Radialkräften des Antriebs bedeutet, dass Druck und Temperatur erhöht werden können, ohne schädliche Spannungsspitzen aufzubauen, so dass dank höherem Druck die Leistung erhöht werden kann.

Durch die Merkmalsgruppe b) wird erreicht, dass sich die vom Zahneingriff der einzelnen treibenden Räder erzeugten Radialkräfte gegenseitig kompensieren oder wenigstens teilweise kompensieren, so dass auch durch diese Maßnahme Spannungsspitzen im Filterrotor und/oder im Filtergehäuse reduziert werden können und anders ausgedrückt: bei gegebener Stabilität des Filterrotors und des Filtergehäuses die Drücke und Temperaturen im Zwischenraum erhöht werden können mit der Folge höherer Leistung.

Die Lagerkräfte der Rotorlagerung können über die Rotorlagerabstützung und die Lagerkräfte der Abtriebsgliedlagerung können über die Abtriebsgliedlagerabstützung in ein gemeinsames Fundament oder in einen Grundrahmen eingeleitet werden. An die Steifigkeit dieses Fundaments bzw. des Grundrahmens bestehen erhebliche Ansprüche, um zu vermeiden, dass durch Deformation des Fundaments bzw. Grundrahmens erneut Kräfte in den Filterrotor und/oder in das Filtergehäuse eingeleitet werden.

Die gemäß Merkmalsgruppe a) vorgeschlagene gesonderte Abstützung der Abtriebsgliedlagerung kann z.B. in der Weise realisiert werden, dass die Getriebeeinheit ein steifes Getriebegehäuse umfasst, in welchem auch das Getriebeabtriebsglied gelagert ist und dass dieses Getriebegehäuse durch eine Getriebegehäuseabstützung stationär abgestützt ist.

Die Getriebeeinheit kann mit mindestens einer Planetengetriebestufe ausgeführt werden. Geeignete Planetengetriebe sind beispielsweise in einem Katalog der Firma A. Friedrich Flender AG, Bocholt mit dem Titel "PLANUREX 2" beschrieben. Dieser Katalog trägt den Druckvermerk K 256 DE/EN/FR 7.99. Wenn das Getriebeabtriebsglied der Planetengetriebestufe zugehört, so lässt sich durch gleichmäßige Verteilung der Planetenräder über den Umfang des Sonnenrads leicht die Bedingung gemäß Merkmalsgruppe b) des Anspruchs 1 erfüllen.

Bei der erfindungsgemäßen Gestaltung ist es möglich, dass die Rotorlagerung wenigstens z.T. an dem Getriebegehäuse befestigt und vermittels des Getriebegehäuses stationär abgestützt ist, wie dies z.B. aus dem Katalog "BHS-FEST-Druckfilter" der BHS-Sonthofen mit dem Druckvermerk h-2/2-94 bekannt ist, ohne dass schädliche Stützkräfte in das Filtergehäuse eingeleitet werden und so eine Erhöhung der Konstruktionsstabilität oder eine Herabsetzung der anwendbaren Drücke erzwungen wird.

Es ist aber auch möglich, dass entsprechend etwa der DE-PS 878 795 die Rotorlagerung durch eine Rotorlagerabstützung abgestützt ist, welche das Filtergehäuse von Stützkräften im wesentlichen freihält.

Die Abstützung der Rotorlagerung kann dabei so realisiert werden, dass die Rotorlagerung in längs der Rotorachse beabstandeten Endbereichen des Filtergehäuses je eine Lagerstelle aufweist. Es ist aber auch möglich, dass die Rotorlagerung auf den der Getriebeeinheit nahen Endbereich des Filtergehäuses beschränkt ist. Man spricht dann von einer "fliegenden Lagerung". Eine solche fliegende Lagerung ist insbesondere dann erwünscht, wenn die Absicht besteht, beispielsweise aus Gründen der erleichterten Zugänglichkeit zum Innenraum des Filtergehäuses und zum Filterrotor, eine Verschiebung des Filtergehäuses gegenüber dem Filterrotor in Richtung der Rotorachse zu ermöglichen. Auf diesen Gesichtspunkt wird später noch eingegangen werden.

Bei den aus der DE-PS 878 795 und der BHS-Druckschrift h-2/2-94 bekannten Ausführungsformen ist der Rotor durch Gleitlager drehbar gelagert. Die Verwendung von Gleitlagern ist eine im Schwermaschinenbau häufig angewandte Maßnahme, die sich im Großen und Ganzen bewährt hat, weil dank der großflächigen Anlageverhältnisse innerhalb eines Gleitlagers relativ geringe Flächenpressungen auftreten. Es wurde nun erkannt, dass sich im Bau von Drehfilteranlagen mit Vorteil auch Wälzlager einsetzen lassen, die zwar zu größeren Flächenpressungen der beteiligten Komponenten führen, jedoch den Vorteil erbringen, dass die Verkantungsgefahr bei Auftreten von radialen Lagerkräften und Biegemomenten sowie der Verschleiß des Lagers reduziert werden. Auf die Verringerung der Verkantungsgefahr dürfte es zurückzuführen sein, dass der Einsatz von Wälzlagern bei der Erfindung zu einer Verringerung von Verschleißerscheinungen geführt hat. Die Verringerung von Verschleißerscheinungen ist nicht nur deshalb bedeutsam, weil damit die Standzeit der Lager von Austausch zu Austausch bzw. Reparatur zu Reparatur vergrößert wird, sondern auch deshalb, weil verschleißbedingtes Lagerspiel während des Betriebs vermieden wird, welches zu unzureichender Positionsfestlegung des Filterrotors gegenüber dem Filtergehäuse führen kann. Solche undefinierten Positionierungen sind deshalb sehr unangenehm, weil die Abdichtverhältnisse an den Filterzellen und auch an den Lagern unkontrollierbar werden. Wenn erfindungsgemäß Wälzlager eingesetzt werden, so ergeben sich nicht nur auf Dauer bessere Abdichtverhältnisse an den Grenzen der Zwischenraumzonen, sondern es wird auch die Abdichtung der gesamten Anlage leichter möglich, auch an den Lagern selbst. Verbesserte Abdichtverhältnisse haben zur Folge, dass die aus Gründen der Leistungserhöhung angestrebten höheren Drücke im Zwischenraum zwischen Filterrotor und Filtergehäuse angewandt werden können, ohne dass die für das Prozessergebnis erforderliche Qualität der Abdichtung zwischen aufeinander folgenden Zwischenraumzonen leidet. Auch wird es leichter möglich, die Gesamtabdichtung der Filteranlage, insbesondere im Bereich der Durchführungen und Lager, zu verbessern, so dass im Falle des Arbeitens mit toxischen Medien die Gefahr eines Austretens solcher Medien reduziert oder unterbunden ist.

Als Wälzlager kommen Kugellager, Rollenlager, Tonnenlager und insbesondere auch Kegelrollenlager in Frage. Besonders geeignet sind für den Fall, dass .Momentenbelastungen zu erwarten sind, Rillenkugellager, Schrägkugellager, vor allem einreihige in X- oder noch besser in O-Anordnung zusammengepasste Schrägkugellager oder Kegelrollenlager.

Die Einleitung von Radialkräften und Kippmomenten in die Lagerstelle des Filterrotors kann auch noch dadurch reduziert werden, dass das Abtriebsglied der Getriebeeinheit mit dem Filterrotor über eine zumindest in Richtung orthogonal zur Rotorachse nachgiebige Ausgleichskupplung verbunden ist. Eine solche Ausgleichskupplung kann beispielsweise als eine Paarung von Membrankupplungen mit zwischen den einzelnen Membrankupplungen liegenden Verbindungsrohren ausgeführt werden. Hierzu wird auf die EP 0 462 991 A2 verwiesen.

Während nach dem Stand der Technik entsprechend DE-PS 878 795 und entsprechend BHS-Prospekt mit dem Druckvermerk h-2/2-94 die Drehmomenteinleitung in den Filterrotor und die Drehverbindungsbaugruppe in verschiedenen Endbereichen des Filtergehäuses angeordnet sind, kann es nach einem weiteren. Gedanken der Erfindung von Vorteil sein, die Drehverbindungsbaugruppe und den Antrieb an einem Ende des Filtergehäuses vorzusehen, etwa so, dass die Drehverbindungsbaugruppe in Richtung der Rotorachse zwischen dem Getriebegehäuse und der Abtriebsgliediagerung angeordnet ist. Dabei ist es besonders vorteilhaft, wenn die Drehverbindungsbaugruppe auf der filtergehäusefernen Seite einer Rotorlagerstelle der Rotorlagerung angeordnet ist. Man kommt dann mit der Rotorlagerung nahe an den Filterrotor heran.

Während nach dem Stand der Technik gemäß DE-PS 878 795 und BHS-Druckschrift h-2/2-94 das Filtergehäuse bodennah abgestützt ist, wird nun empfohlen, dass die Filtergehäuseabstützung mindestens in einem Endbereich des Filtergehäuses eine Mehrzahl von über den Umfang des Filtergehäuses annähernd gleichmäßig verteilten Abstützstellen umfasst. Man muss bedenken, dass durch die Reibung des Filterrotors an der Rotormanteleinheit im Bereich der Grenzen benachbarter Zwischenraumzonen sehr große Drehmomente auf das Filtergehäuse zu erwarten sind, und zwar überdies Drehmomente, die in asymmetrischer Weise über den Umfang des Filtergehäuses verteilt angreifen können. Wenn hier nun vorgeschlagen wird, dass die Filtergehäuseabstützung an einem Fundament oder Zwischenrahmen durch eine Mehrzahl von über den Umfang des Filtergehäuses annähernd gleichmäßig verteilten Abstützstellen abgestützt ist, so können durch eine solche Art der Abstützung Spannungsspitzen in dem Filtergehäuse, die als Folge der Reibung zwischen Filterrotor und Filtergehäuse auftreten, minimiert werden. Eine weitere Minimierung von Spannungsspitzen insbesondere bei zu erwartenden hohen Temperaturen wird möglich, wenn mindestens einem Teil der Abstützstellen Ausgleichsmittel zum Ausgleich von Durchmesserveränderungen der Gehäusemanteleinheit zugeordnet sind.

Eine Möglichkeit der Verwirklichung für den Gedanken der gleichmäßigen Verteilung der Abstützung des Gehäuses über den Umfang besteht darin, dass an zwei längs einer horizontalen Diametrallinie beabstandeten Abstützstellen je eine Abstützsäule oder ein Abstützbock für das Filtergehäuse vorgesehen sind. Bei einer solchen Ausgestaltung sind auch günstige Voraussetzungen für die Realisierung des später noch zu diskutierenden Gedankens geschaffen, die Entleerung des Filterkuchens aus dem Zwischenraum im Sohlenbereich des Filtergehäuses vorzunehmen insofern, als zwischen den Abstützsäulen oder Abstützböcken an mindestens einem Ende des Filtergehäuses ein Zugang zu der Unterseite des Filtergehäuses geschaffen wird.

Die Filtergehäuseabstützung kann auch Ausgleichsmittel für Längenveränderungen des Filtergehäuses in Richtung der Rotorachse aufweisen, wiederum mit dem Ziele, druck- und insbesondere temperaturbedingte Spannungen zu vermeiden oder zu reduzieren.

Während nach dem Stand der Technik gemäß DE-PS 878 795 und gemäß Druckschrift BHS-FEST-Druckfilter der Zwischenraum zwischen der Rotormanteleinheit und der Gehäusemanteleinheit durch eine Stopfbüchse abgedichtet ist, wird erfindungsgemäß weiter vorgeschlagen, dass der Zwischenraum zwischen der Rotormanteleinheit und der Gehäusemanteleinheit in der Nähe mindestens eines axialen Endes dieser . Einheiten durch eine Dichtungsbaugruppe abdichtbar ist, welche durch einen mittels Druckfluid aufblähbaren Torus in Dichtberührung mit einer Dichtfläche mindestens einer der beiden Einheiten bringbar ist.

Durch die erfindungsgemäße Gestaltung der Dichtungsbaugruppe wird es möglich, der Druckerhöhung in dem Zwischenraum Rechnung zu tragen, die entsprechend der eingangs formulierten Aufgabe einer Erhöhung der Filterleistung in Betracht gezogen wird. Insbesondere kann auch bei hohen Drücken eine Dichtwirkung ohne Setzvorgang kontinuierlich aufrechterhalten werden, da eine Ermüdung des Dichtmaterials nicht zu erwarten ist. Der Anpressdruck zwischen der Dichtungsbaugruppe und der mindestens einen Dichtfläche kann gezielt an den jeweiligen Druck im Zwischenraum angepasst werden. Andererseits ist die Möglichkeit gegeben, die Dichtung kurzfristig zu entlasten und wieder anzuspannen, etwa dann, wenn die Anlage für Reparatur- oder Wartungszwecke geöffnet und wieder geschlossen werden soll, oder wenn bei Wechsel eines oder mehrerer Betriebsmedien eine Zwischenreinigung erfolgen soll.

Die Dichtungsbaugruppe kann bei der erfindungsgemäßen Ausgestaltung weitestgehend aus Kunststoff aufgebaut werden. Dies erlaubt es, in Anpassung an das jeweilige Filtriergut und die Behandlungsmedien für das jeweilige Filtriergut resistente Kunststoffe zum Einsatz zu bringen. Dank der Fertigung der Dichtungsbaugruppe aus Kunststoff entfallen auch die bei herkömmlichen Stoffbuchsenpackungen unvermeidlichen Flechtschmierstoffe, bei denen gelegentlich die Gefahr eines Herauslösens aus dem Packungsmaterial bestand. Das Druckfluid kann ständig auf seinen Betriebsdruck hin kontrolliert und an die gewünschte Dichtwirkung angepasst werden; die Notwendigkeit eines regelmäßigen Nachziehens einer Stoffbuchsenpackung entfällt.

Soweit bei Einsatz von Dichtungsbaugruppen auf Kunststoffbasis überhaupt noch eine Schmierung notwendig ist, können zur Schmierung homologe Flüssigkeiten herangezogen werden, d.h. Flüssigkeiten, die mit dem Filtriergut oder/und mit den zugehörigen Behandlungsfluiden soweit verwandt sind, dass Verunreinigungsgefahr allein aufgrund der Verwandtschaft reduziert ist. Bei wässrigen Produktionen, d.h. z.B. Filtriergut in Form einer wässrigen Suspension kann Wasser als Schmiermittel eingesetzt werden.

Die Dichtungsbaugruppe kann stationär mit der Gehäusemanteleinheit verbunden und gegen eine mit der Rotormanteleinheit rotierende Dichtfläche andrückbar sein; sie kann beispielsweise als ein im Querschnitt im wesentlichen U-förmiges Rinnenprofil ausgeführt werden, welches gegenüber der Gehäusemanteleinheit mit einem ersten U-Schenkel festgelegt ist, mit einem zweiten U-Schenkel gegen eine Dichtfläche der Rotormanteleinheit dichtend andrückbar ist und zwischen den beiden U-Schenkeln einen torischen Blähkörper aufnimmt, der an der Gehäusemanteleinheit stationär angeordnet und mit einer Druckfluidquelle verbunden ist. Bei einer solchen Ausführungsform kann durch den Blähdruck des Blähkörpers die Abdichtung sowohl gegen die Gehäusemanteleinheit als auch gegen den Filterrotor eingestellt werden. Der die beiden U-Schenkel miteinander verbindende U-Steg wird zweckmäßig an die Innenseite gelegt, so dass das U zum Außenraum hin öffnet. Damit wird die Zugänglichkeit des Blähkörpers und der an ihm anzubringenden Anschlüsse für die Verbindung mit der Druckfluidquelle verbessert, ohne dass die Dichtwirksamkeit gefährdet wird.

Die Dichtungsbaugruppe kann an einem Endring eines annähernd zylindrischen Rahmens des Filtergehäuses angebracht sein, wobei an diesem Endring mindestens eine plane oder/und zylindrische Anlagefläche für die Dichtungsbaugruppe bereitgestellt werden kann.

Wie aus der Druckschrift BHS-FEST-Druckfilter bekannt, kann das Filtergehäuse einen annähernd zylindrischen Skelettrahmen aufweisen. Dieser Skelettrahmen kann dabei aus mehreren Skelettringen und zwischen den Skelettringen parallel zur Drehachse verlaufenden Skelettstäben aufgebaut sein, wobei im einfachsten Fall bei relativ kurzen Filteranlagen zwei endständige Skelettringe vorgesehen werden. Der Skelettrahmen bildet eine Grundstruktur der Gehäusemanteleinheit. Zwischen aufeinander folgenden Skelettstäben ergeben sich dabei Skelettfenster. In diese Skelettfenster können Füllstücke eingesetzt werden. Die Füllstücke dienen dabei einerseits der Ergänzung des Skelettrahmens zu einem druckhaltigen Gehäuse, das in den verschiedenen Zwischenraumzonen dem Druck des Filtrierguts und der verschiedenen Behandlungsmedien standhält. Die Füllstücke können dabei als Träger von weiteren Funktionsteilen der Filteranlage dienen, z.B. als Träger von Anschlussarmatuen des stationären Zuführleitungssystems, durch welche in die jeweiligen Zwischenraumzonen Filtriergut bzw. Behandlungsmedium eingeleitet werden kann. Daneben sind die Skelettfenster zur Aufnahme der Zonentrennmittel zwischen in Umfangsrichtung aufeinander folgenden Zwischenraumzonen unterteilt, die demgemäß auch als Füllstücke zu verstehen sind.

Es ist wünschenswert, dass die Skelettfenster in ihren Abmessungen genormt sind und wenigstens zum Teil annähernd gleiche Winkelabstände besitzen, so dass einzelne Skelettfenster mit unterschiedlichen Füllstücken bestückt werden können, also z.B. Füllstücken, die als Zonentrennmittel dienen oder Füllstücken, die zum Anschluss von Leitungen des Zuführleitungssystems ausgebildet sind. Auf diese Weise ist es möglich, durch Austausch der Füllstücke eine vorgegebene Grundkonstruktion der Filteranlage an verschiedene Filtrieraufgaben anzupassen, insbesondere hinsichtlich der Zoneneinteilung.

Obwohl der durch den Skelettrahmen und die Füllstücke gebildete Grundbestandteil des Filtergehäuses an sich bereits druckhaltig ist, ergibt sich häufig der Wunsch einer zusätzlichen Abdeckung, die auf einzelne Bereiche des Außenumfangs beschränkt sein kann, die sich aber auch über die gesamte Mantelfläche des Gehäusemantels erstrecken kann. Diese Abdeckung kann die verschiedensten Funktionen übernehmen. So können an der Abdeckung wiederum einzelne Funktionsteile angebracht sein, die einzelnen Bereichen der Gehäusemanteleinheit zugeordnet sind, z.B. Armaturen des Zuführleitungssystems. Daneben kann die Abdeckung Funktionen der mechanischen Versteifung der Gehäusemanteleinheit der zusätzlichen Abdichtung und der Verbesserung des Erscheinungsbilds übernehmen. Die Abdeckung kann in der Weise gestaltet werden, dass mindestens einem Skelettfenster ein Deckel zugeordnet ist. Diese Deckel können Träger von Funktionsteilen der Filteranlage sein, z.B. Armaturen, welche gewünschtenfalls mit einem Füllstück oder einem von einem Füllstück getragenen weiteren Funktionsteil der Filteranlage zusammenwirken. Dabei ist es möglich, dass ein solcher Deckel auf die Abdeckung eines einzelnen Füllstücks beschränkt ist; es ist aber auch möglich, dass ein Deckel zur Abdeckung mehrerer Füllstücke ausgebildet ist.

Im Hinblick darauf, dass durch einen Deckel wartungs- und/oder reparaturbedürftige Funktionsteile, nämlich entweder die Füllstücke selbst oder an den Füllstücken angebrachte zusätzliche Funktionsteile abgedeckt sind, wird zur Erleichterung der Zugänglichkeit für Wartungs- und Reparaturarbeiten empfohlen, dass ein Deckel durch Anlenk- oder/und Befestigungsmittel an dem Skelettrahmen betriebsmäßig leicht feststellbar ist. Die Handhabung wird insbesondere erleichtert, wenn Anlenkmittel vorgesehen sind, die ein einfaches Abklappen eines Deckels ermöglichen.
Denkbar ist auch, dass der Deckel durch Anlenk- oder/und Befestigungsmittel an einem Füllstück feststellbar ist. In diesem Fall kann der Deckel mit dem jeweiligen Füllstück leicht ein- und ausgebaut werden. Sind aber nur kleinere Wartungsarbeiten erforderlich, die an dem jeweiligen Füllstück angeordnete Funktionsteile, z.B. Armaturen betreffen, so kann das Füllstück im Skelettrahmen belassen werden und zur Zugänglichmachung dieser Funktionsteile der Deckel gegenüber dem jeweiligen Füllstück aufgeklappt werden. Der Form des Filtergehäuses entsprechend empfiehlt es sich, eine etwaige Anlenkung des Deckels - gleichgültig, ob am Skelettrahmen oder am Füllstück - mit einer Schwenkachse auszuführen, die parallel zur Achse des Filterrotors ist.

Bei der erfindungsgemäßen Drehfilteranlage ist es möglich, das Austreten von Medien des Filterprozesses, also des Filtrierguts und der Behandlungsmittel, weitgehend zu unterdrücken. Dies ist insbesondere ein Resultat der Abdichtung durch die erfindungsgemäßen Dichtungsbaugruppen und einer verbesserten Abdichtung zwischen den Füllstücken und den Skelettfenstern. Darüber hinaus kann die Abdichtung durch eine geschlossene Abdeckung ggf. aufgebaut oder ergänzt durch einzelne Deckel verbessert oder noch sicherer gemacht werden.

Für die Abdichtung der Rotormanteleinheit ist ein kritischer Bereich die Abdichtung zwischen den Füllstücken, insbesondere den als Zonentrennmitteln ausgebildeten Füllstücken, einerseits und dem Umrahmungsbereich der die Füllstücke aufnehmenden Skelettfenster andererseits.

Diese Abdichtung kann dadurch im Bereich der Zonentrennmittel sicher gestaltet werden, dass ein Zonentrennmittel von einer Trennplatte gebildet ist, an deren der Rotormanteleinheit fernen Seite eine druckfluidbeaufschlagte Membran oder/und ein druckfluidbeaufschlagtes Kissen anliegt. Durch eine druckfluidbeaufschlagte Membran kann insbesondere der Austritt von Prozessmedium aus dem Zwischenraum mit Sicherheit unterbunden werden, selbst wenn vorgeschaltete, d.h. dem Zwischenraum nähere Abdichtmittel versagen oder Leckströme zulassen sollten. Weiterhin kann auf die Membran Druck von außen gegeben werden, so dass unter Vermittlung der Membran die Andrückung der Zonentrennmittel, d.h. beispielsweise einer Trennplatte gegen die Zellstruktur der Rotormanteleinheit, bewirkt werden kann. Auch ein druckfluidbeaufschlagtes Kissen kann zur Andrückung des Zonentrennmittels gegen die Zellstruktur der Rotormanteleinheit benützt werden und gleichzeitig Abdichtaufgaben für die Prozessmedien übernehmen. Optimale Verhältnisse ergeben sich bei Kombination einer Membran und eines druckfluidbeaufschlagten Kissens.

Die Zonentrennmittel haben in der Regel eine in Richtung der Rotorachse längliche Form; man spricht von einer Trennplatte. Diese Trennplatte kann mit einem Leistenkörper als Träger ausgeführt sein und mit einer an dem Leistenkörper angebrachten Dichtschicht als Belag. Die Dichtschicht kann sowohl zur Anlage an der Zellstruktur der Rotormanteleinheit als auch zur Anlage an der Fensterbegrenzung des Skelettfensters ausgebildet sein, so dass einerseits die dichte Abtrennung aufeinander folgender Zwischenraumzonen voneinander gewährleistet ist und andererseits der Austritt von Prozessmedium durch die Gehäusemanteleinheit unterbunden ist. Der Leistenkörper kann aus Kunststoff hergestellt werden. Damit wird einerseits eine Gewichtsersparnis und eine Erleichterung der Handhabung beim. Ein- und Ausbau der jeweiligen Trennplatte erreicht. Zum anderen kann der Kunststoff bedarfgerecht gewählt werden in Anpassung an die für den jeweiligen Anwendungsfall zu erwartenden Prozessmedien, um hohe Dichtheit und lange Standzeit der jeweiligen Trennplatte zu erhalten.

Hinsichtlich der Abdichtung des Zwischenraums ist auch die Grenze zwischen einzelnen Filterzellen und dem der jeweiligen Filterzelle zugeordneten Filtermittel kritisch. Es wird vorgeschlagen, dass ein einer Filterzelle zugeordnetes Filtermittel einen an seinem Umfang gegen eine Zellenumfassungswand abgedichteten Trägerrahmen, vorzugsweise einen Trägerrahmen aus Kunststoff, für ein Filtergewebe, Sieb oder dgl. umfasst, wobei ein zur Abdichtung eingesetzter Dichtring den Zwischenraum zwischen einer Umfangsfläche des Trägerrahmens und der Zellenumfassungswand annähernd bis auf die Höhe einer filtriergutseitigen umfangsnahen Stirnfläche des Trägerrahmens dichtend ausfüllt. Durch diese Maßnahme wird insbesondere erreicht, dass in den Filterzellen tote Ecken vermieden werden, in denen sich über längere Zeit hinweg Rückstände ansammeln könnten. Solche Rückstände zu vermeiden, ist ein besonderes Anliegen nicht nur beim Wechsel der Prozessmedien, bei dem ohnehin eine vollständige Reinigung in der Regel erforderlich sein wird, sondern auch beim Chargenwechsel, d.h. also dann, wenn eine neue Charge eines grundsätzlich unveränderten Prozessmediums, insbesondere Filtrierguts, zur Behandlung ansteht.

Somit kann eine vollständige Zwischenraumausfüllung zwischen Trägerrahmen des Filtermittels und Zellenumfassungswand vorgesehen werden.

Die Herstellung des Trägerrahmens eines Filtermittels aus Kunststoff schafft auch eine günstige Voraussetzung dafür, das Filtergewebe als Metalldrahtgewebe auszuführen und mit dem Trägerrahmen zu verschweißen.

Auf das Problem der Wartung und Reinigung der Drehfilteranlage ist bereits mehrfach hingewiesen worden. Dieses Problem kann über die bereits erwähnten Detailmaßnahmen hinaus grundsätzlich dadurch gelöst werden, dass das Filtergehäuse zur wenigstens teilweisen Freilegung des Filterrotors relativ zu dem Filterrotor in Richtung der Drehachse verschiebbar ist. Der Gedanke der Verschiebbarkeit von Filtergehäuse und Filterrotor relativ zueinander ist grundsätzlich nicht an die vorstehend behandelten Maßnahmen der fliegenden Rotorlagerung und Lagerabstützung gebunden, auch nicht an die vorstehend behandelte Anordnung der Getriebeeinheit und der Drehverbindungseinheit am gleichen Ende des Filtergehäuses und auch nicht an die vorstehend behandelte Abdichtung des Zwischenraums durch eine Dichtungsbaugruppe mit aufblähbarem Torus. Gleichwohl kann die Verschiebbarkeit zwischen Filtergehäuse und Filterrotor durch jede einzelne dieser Maßnahmen und insbesondere durch die kombinierte Anwendung dieser Maßnahmen sehr erleichtert werden.

Der Gedanke der Verschiebbarkeit von Filtergehäuse und Filterrotor lässt sich leicht in der Weise realisieren, dass das Filtergehäuse auf einem stationären Verschiebegerüst verschiebbar geführt ist, insbesondere wenn der Filterrotor fliegend gelagert ist.

Nach einem weiteren Merkmal der Erfindung ist vorgesehen, dass im Bereich von reinigungsbedürftigen Funktionsteilen Reinigungsdüsen vorgesehen sind, die mit einer Reinigungsfluidversorgung verbunden sind.

Die Anordnung von Reinigungsdüsen stellt bereits an sich eine wesentliche Vereinfachung des bei Filteranlagen besonders bedeutsamen Reinigungsproblems dar. In Verbindung mit der Verschiebbarkeit von Filtergehäuse und Filterrotor relativ zueinander und auch in Verbindung mit dem weitgehenden Einsatz von Kunststoffteilen und der Vermeidung von toten Räumen ergibt sich ein perfektes Reinigungssystem. Man kann eine Reinigung der Drehfilteranlage durchführen, ohne dass eine Abhängigkeit von der Geschicklichkeit und dem guten Willen des mit der Reinigung betrauten Personals besteht. Die Reinigungsdüsen können nacheinander mit unterschiedlichen Reinigungs- und Trocknungsmedien betrieben werden. Im Einzelnen werden die Reinigungsdüsen jeweils dort angeordnet, wo die reinigungsbedürftigen Anlagenteile am leichtesten zu erreichen sind, sei es im zusammengeschobenen Zustand von Filtergehäuse und Filterrotor, sei es nach dem Auseinanderschieben von Filtergehäuse und Filterrotor.

Das Austragen des Filterkuchens aus der Zellstruktur des Filterrotors kann problematisch sein, insbesondere wenn der Filterkuchen sich als klebrige Masse darstellt. Um den Filterkuchen möglichst vollständig aus den jeweiligen Zellen austragen zu können, sind bereits Schaber entwickelt worden, die in der jeweiligen Auswurfzone in die Zellen eingreifen und den Filterkuchen untergreifen und auskratzen. Diese Auswurfeinrichtungen werden umso schwieriger in der Konstruktion und in der Handhabung, je tiefer die Filterzellen werden. Andererseits ist es im Hinblick auf eine hohe Leistung der Drehfilteranlage wünschenswert, die Zellen möglichst tief zu machen.

Es hat sich gezeigt, dass in gewissen Anwendungsfällen die Anordnung der Auswurfzone im Sohlenbereich, d.h. im tiefstliegenden Bereich des Filtergehäuses vorteilhaft ist, weil dort der Auswurf des Filterkuchens durch die Schwerkraft optimal unterstützt wird. Aus diesem Grunde wird weiter vorgeschlagen, dass eine Filterkuchenauswurfzone im tiefstliegenden Bereich des Gehäusemantels vorgesehen ist. Diese Maßnahme ist grundsätzlich nicht an die Art der Abstützung der Filterrotorlagerung gebunden. Es hat sich jedoch gezeigt, dass bei Anordnung der Filterkuchenauswurfzone im tiefstliegenden Bereich des Filtergehäuses deren Zugänglichkeit durch die vorstehend erwähnte Anordnung der Abstützstellen für das Filtergehäuse an zwei längs einer horizontalen Diametrallinie beabstandeten Orten erheblich verbessert werden kann. Die Filterkuchenauswurfzone kann also im tiefstliegenden Bereich angeordnet sein.

Die beiliegenden Figuren erläutern die Grundlagen der Erfindung und Einzelheiten der Erfindung anhand von Ausführungsbeispielen. Es stellen dar:
- Fig. 1: eine Prinzipdarstellung einer bekannten Drehfilteranlage im Querschnitt;
- Fig. 2: einen Längsschnitt durch die Drehfilteranlage nach Fig. 1;
- Fig. 3: einen Ausschnitt aus der Zellstruktur des Filterrotors nach Fig. 1 und 2 im Bereich III der Fig. 2;
- Fig. 4: eine Seitenansicht teilweise im Schnitt einer erfindungs- gemäßen Drehfilteranlage;
- Fig. 5: eine Draufsicht auf die Drehfilteranlage gemäß Fig. 4 in Pfeilrichtung V der Fig. 4;
- Fig. 6: eine weiter schematisierte Endansicht der Drehfilteranlage gemäß Fig. 5 in Pfeilrichtung VI der Fig. 5;
- Fig. 7: eine Detailansicht eines Stützbocks im Bereich VII der Fig. 6;
- Fig. 8: eine Ansicht auf den Stützbock gemäß Fig. 7 in Pfeilrichtung VIII der Fig. 7;
- Fig. 9: eine Dichtungsbaugruppe gemäß Detail IX der Fig. 4;
- Fig. 10: ein Umfangssegment einer Gehäusemanteleinheit entspre- chend dem Bereich X der Fig. 1;
- Fig. 11: eine Filterzelle im Schnitt gemäß Linie XI-XI der Fig. 3;
- Fig. 12: eine Seitenansicht teilweise im Schnitt eines weiteren Aus- führungsbeispiels einer erfindungsgemäßen Drehfilteranlage;
- Fig. 13: eine perspektivische Ansicht eines dritten Ausführungs- beispiel einer erfindungsgemäßen Drehfilteranlage mit einem gegenüber dem Filterrotor verschiebbaren Filtergehäuse in Betriebsstellung und
- Fig. 14: eine Ansicht der Drehfilteranlage gemäß Fig. 13 in einer Inspektions- und Wartungsstellung.

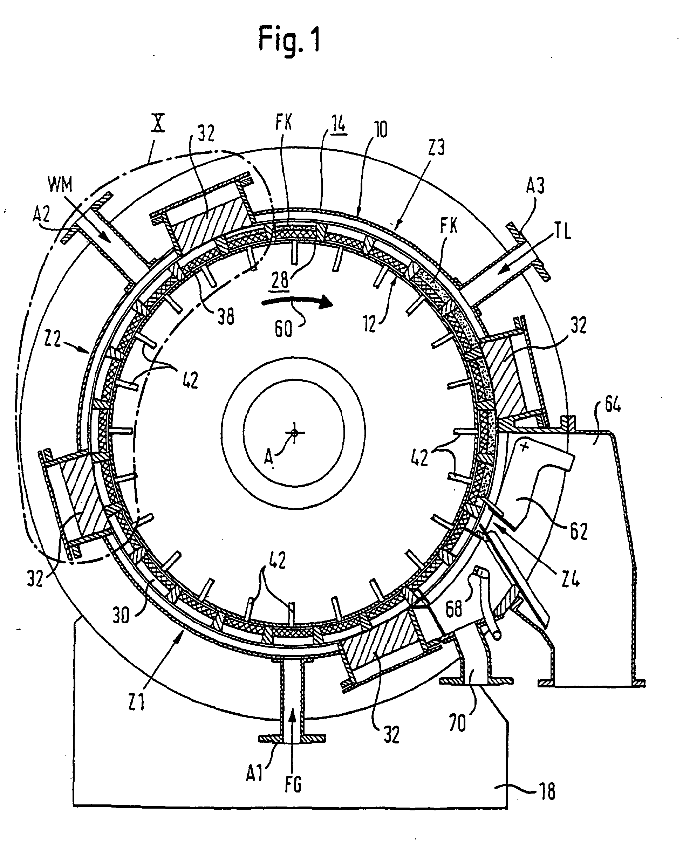

Anhand der Fig. 1 - 3 seien zunächst der Prinzipaufbau und die Betriebsweise einer Drehfilteranlage beschrieben. Die Fig. 1 - 3 entstammen der Druckschrift BHS-FEST-Druckfilter mit dem Druckvermerk h-2/2-94.

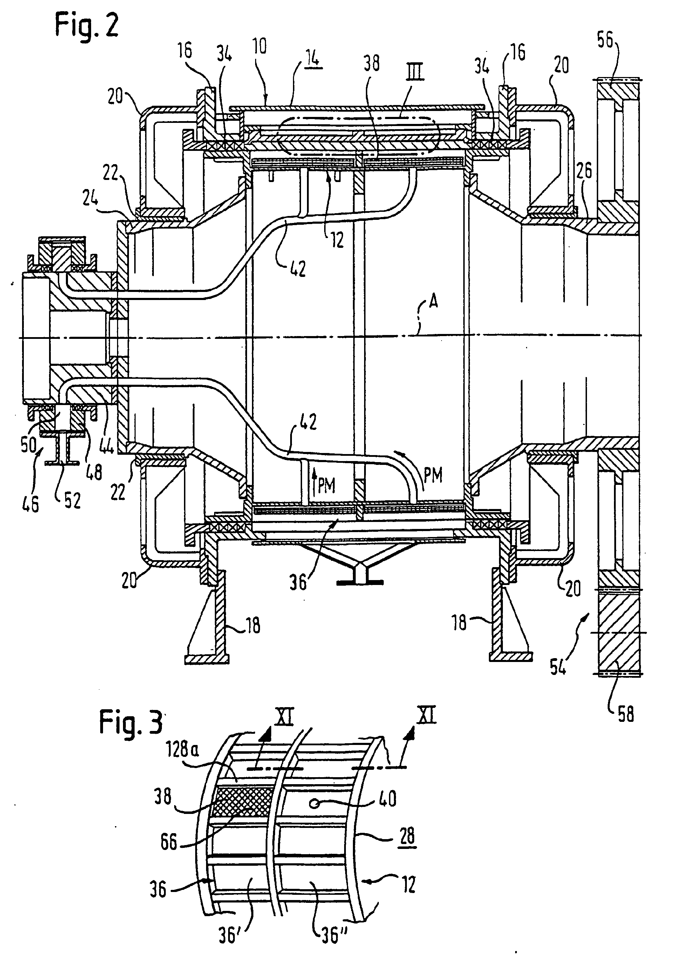

In den Fig. 1 und 2 ist ein Filtergehäuse ganz allgemein mit 10 und ein Filterrotor ganz allgemein mit 12 bezeichnet. Das Filtergehäuse 10 umfasst eine Gehäusemanteleinheit 14 mit Endringen 16. Die Filtergehäuseeinheit 14 ist vermittels einer an den Endringen 16 ansetzenden Filtergehäuseabstützung 18 auf einem nicht dargestellten Fundament abgestützt. An der Filtergehäuseeinheit 10 sind Lagerschilde 20 befestigt, die Rotorlager 22 umfassen. In den Rotorlagern 22 ist der Filterrotor 12 vermittels zweier Endabschnitte 24 und 26 gelagert. Der Filterrotor 12 umfasst eine Rotormanteleinheit 28. Zwischen der Rotormanteleinheit 28 und der Gehäusemanteleinheit 14 ist ein Zwischenraum 30 definiert. Dieser Zwischenraum 30 ist durch Zonentrennmittel 32 in Zwischenraumzonen Z1, Z2, Z3, Z4 unterteilt. An seinen axial beabstandeten Enden ist der Zwischenraum 30 durch Dichtungsbaugruppen 34 abgedichtet. Die dem Zwischenraum 30 zugekehrte Außenseite der Rotormanteleinheit 28 ist als eine Zellstruktur gestaltet, die in Fig. 3 dargestellt ist. Diese Zellstruktur umfasst Filterzellen 36' und 36", wobei jeweils eine Filterzelle 36' und eine Filterzelle 36" eine Filterzellengruppe 36 bilden. In jeder Filterzelle 36',36" ist ein Filtermittel 38 angeordnet, welches eine Abführöffnung 40 überdeckt. Die Abführöffnungen 40 der Filterzellengruppe 36 sind durch eine mit dem Filterrotor 28 umlaufende Abführleitung 42 mit dem ebenfalls mit dem Filterrotor 28 umlaufenden Kern 44 einer Drehverbindungsbaugruppe 46 verbunden, der umlaufende Kern 44 ist an dem Endabschnitt 24 des Filterrotors 12 drehfest angeordnet. Zu der Drehverbindungsbaugruppe 46 gehört ferner ein Drehverbindungsstator 48, welcher an dem Filtergehäuse 10 gegen Drehung abgestützt ist. Von jeder Zellengruppe 36 führt, wie in der unteren Hälfte der Fig. 2 dargestellt, je eine Abführleitung 42 zu dem Drehverbindungskern 44. In dem Drehverbindungsstator 48 sind Ringsegmentkammern 50 angeordnet, wobei eine Ringsegmentkammer 50 in ihrer Umfangslänge jeweils der Umfangslänge einer der Zwischenraumzonen Z1 - Z3 entspricht. Von jedem der Ringsegmenträume 50 führt eine stationäre Abführleitung 52 zu einem nicht dargestellten Sammelraum.

Der Filterrotor 10 ist durch eine Getriebeeinheit 54 angetrieben. Die Getriebeeinheit 54 umfasst ein Großzahnrad 56 und ein Antriebsritzel 58. Das Antriebsritzel 58 wird von einem Elektromotor angetrieben. Die Drehzahl des Elektromotors wird durch die Getriebeeinheit 54 ins Langsame übersetzt, so dass der Filterrotor 12 mit einer Drehzahl in der Größenordnung von 0,5 - 4 Upm umläuft. Die Drehrichtung ist in Fig. 1 mit einem Pfeil 60 angezeigt.

An die Zwischenraumzonen Z1 - Z3 sind Zuführarmaturen A1 - A3 angeschlossen. Der Zwischenraumzone Z4 sind Auswerfschaber 62 zugeordnet. Ferner schließt sich an die Zwischenraumzone Z4 ein Filterkuchenauswurfschacht 64 an.

Die soweit beschriebene Drehfilteranlage arbeitet beispielsweise wie folgt:
Durch die Zuführarmatur A1 wird Filtriergut FG, z.B. eine Flüssigkeits-Feststoff-Suspension zugeführt, die sich in der Zwischenraumzone Z1 ausbreitet und dort unter hydrostatischem Druck steht. Der Flüssigkeitsbestandteil des Filtrierguts FG wird durch das Filtermittel 38 der Zellen 36',36" hindurch gedrückt, so dass sich der Feststoffanteil als Filterkuchen FK in den Zuführungsräumen 66 jeweils radial außerhalb der Filtermittel 38 ansammelt und der Flüssigkeitsanteil, für den speziellen Fall des Flüssigkeitsanteils des Filtrierguts FG Filtrat genannt, durch die Abfuhröffnungen 40 in die Abführleitungen 42 gelangt. Der Filtratfluss ist in Fig. 2 durch einen Pfeil PM angedeutet. Wenn man sich die Fig. 1 als eine Momentaufnahme während der kontinuierlichen Drehbewegung des Filterrotors 12 vorstellt, so sind in dem entsprechenden Moment sämtliche Filterzellen 36',36", welche der Zwischenraumzone Z1 radial gegenüber stehen und zu dieser hin offen sind, mit der Zuführarmatur A1 in Verbindung, und ferner sind die Abführöffnungen 40 eben dieser mit der Zwischenraumzone Z1 in Verbindung stehenden Zellen 36',36" über jeweils eine Abführleitung 42 mit dem Drehverbindungskern 44 verbunden und weiter über die Drehverbindung 46 mit der stationären Abführleitung 52 verbunden, die zu einem nicht eingezeichneten Filtratauffangbehälter führt. Die der Zwischenraumzone Z1 zugeordnete Ringsegmentkammer 50 ist so bemessen, dass in dem durch Fig. 1 dargestellten Zeitpunkt sämtliche zur Zwischenraumzone Z1 hin offenen Zellen 36' und 36" mit ihren Abflussöffnungen 40 letztlich an den stationären Filtratauffangbehälter angeschlossen sind. Die aus dem Filtriergut FG in der Zwischenraumzone Z1 austretende, im Filtriergut FG enthaltene Flüssigkeit wird als das "Filtrat" bezeichnet.

Wenn eine Filterzellengruppe 36 an einem Zonentrennmittel 32 vorbei geht, so wird im Laufe der weiteren Drehung des Filterrotors 12 die Zellengruppe 36 von der Zwischenraumzone Z1 getrennt und gelangt nach Vorbeilauf an dem Zonentrennmittel 32 in Verbindung mit der Zwischenraumzone Z2. Beim Eintritt einer Zellengruppe 36 in den Bereich der Zwischenraumzone Z2 hat sich über dem Filtermittel 38 der beiden Zellen 36',36" ein Filterkuchen FK aus dem durch das Filtermittel 38 zurückgehaltenen Feststoffanteil des Filtrierguts FG gebildet. Dieser Filterkuchen FK soll nun in dem Bereich der Zwischenraumzone Z2 gereinigt werden. Zu diesem Zweck wird der Zwischenraumzone Z2 durch die Zuführarmatur A 2 ein Waschmittel WM zugeleitet, das sich über die ganze Zwischenraumzone Z2 verteilt und den jeweiligen Filterkuchen FK sowie das ihm unterliegende Filtermittel 38 durchdringt, um dann durch die jeweilige Abführöffnung 40 in die jeweilige Abführleitung 42 zu gelangen. Die Abführleitungen 42 sämtlicher Filterzellen 36',36", welche in der Momentaufnahme gemäß Fig. 1 gerade mit der Zwischenraumzone Z2 in Verbindung stehen, werden durch eine in Fig. 2 nicht erkennbare Ringsegmentkammer mit einer stationären Abführleitung (nicht eingezeichnet) einem Waschflüssigkeitssammelbehälter zugeführt, dem eine Trennstufe nachgeschaltet sein kann, um die ausgewaschenen flüssigen Bestandteile aus dem Kuchen von der Waschflüssigkeit abzutrennen und die Waschflüssigkeit für einen erneuten Waschvorgang einsetzen zu können.

Nach dem Durchgang einer Zellengruppe 36 durch die Ringraumzone Z2 gelangt diese Zellengruppe 36 nach Vorbeigang an dem die Zwischenraumzonen Z2 und Z3 trennenden Zonentrennmittel 32 in radiale Gegenüberstellung zu der Zwischenraumzone Z3. Der Zwischenraumzone Z3 wird durch die Zuführarmatur A3 Trocknungsluft TL zugeführt, die sich über die ganze Zwischenraumzone Z3 verteilt und zu jeder der Zellengruppen 36 gelangen kann, die gerade der Zwischenraumzone Z3 gegenüber stehen. Diese Trocknungsluft TL tritt durch den Filterkuchen ZK und das ihm jeweils unterliegende Filtermittel 38 hindurch und kann durch die jeweilige Abführöffnung 40 und die jeweils zugehörige Abführleitung 42 wiederum zu der Drehverbindungsbaugruppe 46 gelangen. Dort wird die Trocknungsluft TL einer weiteren Ringsegmentkammer (nicht eingezeichnet) des Drehverbindungsstators 48 zugeführt und kann von dieser durch eine nicht eingezeichnete stationäre Abführleitung in die Atmosphäre entweichen oder einer Trennvorrichtung zugeführt werden, in der die von der Trocknungsluft TL aus dem Filterkuchen FK ausgetragenen flüssigen Bestandteile abgeschieden werden können. Alle in der Momentaufnahme der Fig. 1 jeweils in Gegenüberstellung zu der Zwischenraumzone Z3 stehenden Zellen gruppen 36 sind über die weitere Ringsegmentkammer des Drehverbindungsstators 48 gleichzeitig mit der stationären Abführleitung für die Trocknungsluft TL verbunden.

Betrachtet man eine einzelne Zellengruppe 36 während eines Umlaufs um die Rotorachse, so erkennt man, dass diese Zellengruppe 36 nacheinander den folgenden Vorgängen unterworfen wird:
Die Zellengruppe 36 wird beim Eintritt in die Zwischenraumzone Z1 mit Filtriergut FG gefüllt.

Die flüssigen Anteile werden aus dem eingetretenen Filtriergut FG durch das Filtermittel 38 hindurch gedrückt und gelangen in den Filtratauffangbehälter als Filtrat.

Der nach Durchgang durch die Zwischenraumzone Z1 auf dem Boden der Filterzellengruppe 36 abgesetzte Filterkuchen FK wird nach Eintritt in die Zwischenraumzone Z2 durch das Waschmittel WM gewaschen. Die verbrauchte Waschflüssigkeit gelangt durch den Filterkuchen FK und das darunter liegende Filtermittel 38 hindurch in das Filtratablaufsystem, und dann beispielsweise in den Waschmittelsammelbehälter.

Wenn der in der Zellengruppe 36 gewaschene Filterkuchen FK in die Zwischenraumzone Z3 eintritt, wird er durch die über die Armatur A3 eingeleitete Trocknungsluft TL getrocknet. Die Trocknungsluft TL durchdringt den Filterkuchen FK und das ihm unterliegende Filtermittel 38 und gelangt durch die zugehörige Abführleitung 42 und die Drehverbindungsbaugruppe 46 in die Atmosphäre oder einen Abscheider.

Wenn eine Filterzelle 36',36" das Zonentrennmittel 32 zwischen den Zwischenraumzonen Z3 und Z4 durchlaufen hat, ist die Behandlung beendet. Der Filterkuchen FK kann nunmehr ausgeworfen werden. Hierzu dienen in der Zwischenraumzone Z4 die Auswerfschaber 62, die derart gelagert und gesteuert sind, dass sie in jede einzelne Filterzelle 36',36" nacheinander eindringen, den jeweiligen Filterkuchen FK auswerfen und danach im Takte der Rotordrehung wieder aus der Filterzelle 36'36" zurücktreten. Es ist leicht einzusehen, dass der Auswerfvorgang und die zu seiner Durchführung eingesetzten Auswerfschaber 62 umso komplizierter werden, je tiefer die Filterzellen 36' und 36" sind.

In der Zwischenraumzone Z4 ist auch noch eine Waschdüse 68 zu erkennen, mittels welcher etwaige Auswerfrückstände in den Zellen 36',36" aus diesen ausgewaschen werden können. Die dabei versprühte Waschflüssigkeit kann durch einen Waschflüssigkeitsauslauf 70 abgeführt werden.

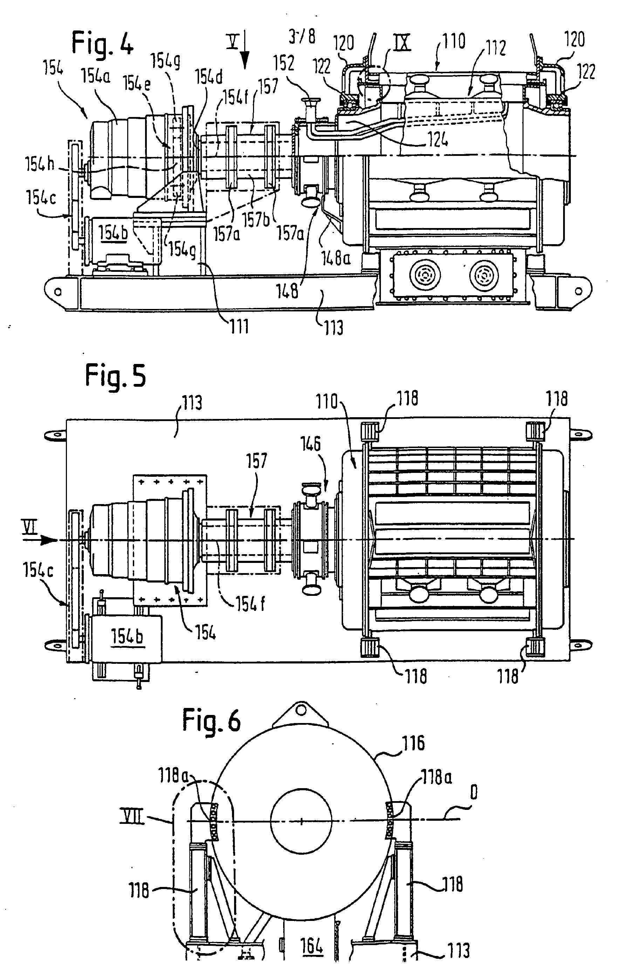

In der erfindungsgemäßen Ausführungsform gemäß Fig. 4 - 11 wird auf dem Bau- und Arbeitsprinzip der Fig. 1 - 3 aufgebaut; analoge Teile sind mit den gleichen Bezugszeichen bezeichnet, wie in Fig. 1 - 3, jeweils vermehrt um die Zahl 100.

In Fig. 4 ist der Filterrotor 112 durch Kugellager 122 in an dem Filtergehäuse 110 angebrachten Lagerschilden 120 gelagert. Der Antrieb des Filterrotors 112 erfolgt nunmehr von einer Planetengetriebeeinheit 154 her, die durch einen Stützbock 111 auf einem Grundrahmen 113 abgestützt ist. Das Planetengetriebe 154 umfasst ein Planetengetriebegehäuse 154a, welches mit dem Stützbock 111 verschraubt ist. Das Planetengetriebe 154 wird von einem Elektromotor 154b her über einen Riementrieb 154c angetrieben. Der Elektromotor 154b ist ebenfalls auf dem Grundrahmen 113 abgestützt. Das Planetengetriebe 154 untersetzt die ihm durch den Elektromotor 154b eingeleitete Drehzahl ins Langsame. Die langsame Drehzahl wird an einem Abtriebsglied in Form einer Abtriebswelle 154d abgenommen. Die Abtriebswelle 154d ist über eine Wellenkupplung 157 mit dem umlaufenden Drehverbindungskern 144 verbunden, der als Fortsatz des Filterrotors 112 mit dem Endabschnitt 124 des Filterrotors 112 drehfest verbunden ist. Die Wellenkupplung 157 ist von zwei Lammellenpaketen 157a einer Stahl-Lamellenkupplung und einem diese verbindenden Rohrstück 157b gebildet und dient dazu, Fluchtungsfehler zwischen der Ausgangswelle 154d des Planetengetriebes 154 und dem Endabschnitt 124 des Filterrotors 112 auszugleichen.

Man beachte, dass bei dieser Ausführungsform im Gegensatz zu der unter Bezugnahme auf Fig. 1 - 3 beschriebenen bekannten Ausführungsform der Antrieb des Filterrotors 112 von der gleichen, der linken Seite des Filtergehäuses 110 her erfolgt, auf der auch die Drehverbindungsbaugruppe 146 angeordnet ist. Man beachte weiter, dass das Planetengetriebe 154 durch einen gesonderten Stützbock 111 auf dem Grundrahmen 113 befestigt ist. Auch das Filtergehäuse 110 ist auf diesem Grundrahmen 113 befestigt, und zwar durch Abstützböcke 118, die in Fig. 6 zu erkennen sind. Der Grundrahmen 113 besitzt hohe Torsionssteifigkeit, so dass die Reaktionskräfte aus dem Planetengetriebe 154 und aus dem Getriebegehäuse 110 von ihm im wesentlichen deformationsfrei aufgenommen werden können.

Das Planetengetriebe 154 ist mit einer Ausgangsstufe 154e ausgeführt, welche eine Mehrzahl von gleichmäßig über den Umfang der Planetengetriebeachse 154f verteilten Planetenrädern 154g umfasst, so dass Radialkräfte, die etwa an der Eingriffsstelle zwischen den Planetenrädern 154g und einem mit der Abtriebswelle 154d verbundenen Zentralrad 1 54h entstehen können, sich gegenseitig auskompensieren. Es werden deshalb keine wesentlichen Radialkräfte von dem Planetengetriebe 154 auf den Filterrotor 112 übertragen, und es entstehen deshalb weder asymmetrische Belastungen an dem Filterrotor 112 noch an dem Filtergehäuse 110.

Selbst wenn in dem Planetengetriebe 154 Radialkräfte entstehen würden, die sich bis zu der Abtriebswelle 154d fortsetzen, so würden diese von dem Getriebegehäuse 154a aufgenommen werden und durch den Abstützbock 111 in den Grundrahmen 113 eingeleitet werden; sie könnten demnach auch keine asymmetrische Belastung des Filterrotors 112 und des Filtergehäuses 110 bewirken. Die Wellenkupplung 157 tut ein Übriges, um den Filterrotor 112 und damit auch das Filtergehäuse 110 von asymmetrischen Radialkräften zu entlasten. Der Drehverbindungsstator 148 ist durch eine Drehmomentstütze 148a an dem Lagerschild 120 gegen Mitdrehen mit dem Filterrotor gesichert.

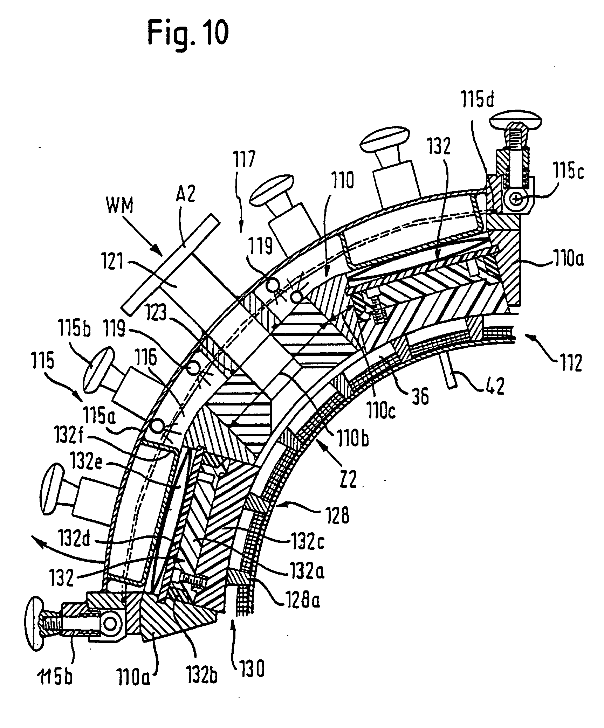

Das Filtergehäuse 110 ist an dem Grundrahmen 113 durch die bereits erwähnten Abstützböcke 118 abgestützt. Diese Abstützböcke 118 sind in zwei Abstützstellen 118a mit dem Filtergehäuse 110, und zwar im Beispielsfall mit den Endringen 116 des Filtergehäuses, verbunden. Jedem der beiden Endringe 116 ist ein Paar von Stützböcken zugeordnet, so wie in Fig. 6 gezeichnet. Man erkennt, dass die Abstützstellen 118a sich diametral entlang einer horizontalen Diametrallinie D gegenüber liegen, also mit 180°-Abständen gleichmäßig über den Umfang des Filtergehäuses 110 verteilt sind. Über die Stützböcke werden hohe Stützkräfte von dem Filtergehäuse 110 in den Grundrahmen 113 eingeleitet. Die hohen Stützkräfte rühren insbesondere von dem Mitnahmemoment her, welches der Filterrotor 112 an den Zonentrennmitteln 132 (siehe Fig. 10) auf das Filtergehäuse 112 ausübt. Die aus diesem hohen Mitnahmemoment entstehenden Stützkräfte werden durch die Lage der Abstützstellen 118a in Gegenüberstellung längs der Diametralllinie D einigermaßen symmetrisch auf das Filtergehäuse 110 übertragen, so dass die Belastung des Filtergehäuses 110 jedenfalls symmetrischer ist, als wenn - wie in der Ausführungsform nach den Fig. 1 - 3 - nur eine einzige Abstützung 18 im Bodenbereich des Filtergehäuses vorhanden ist.

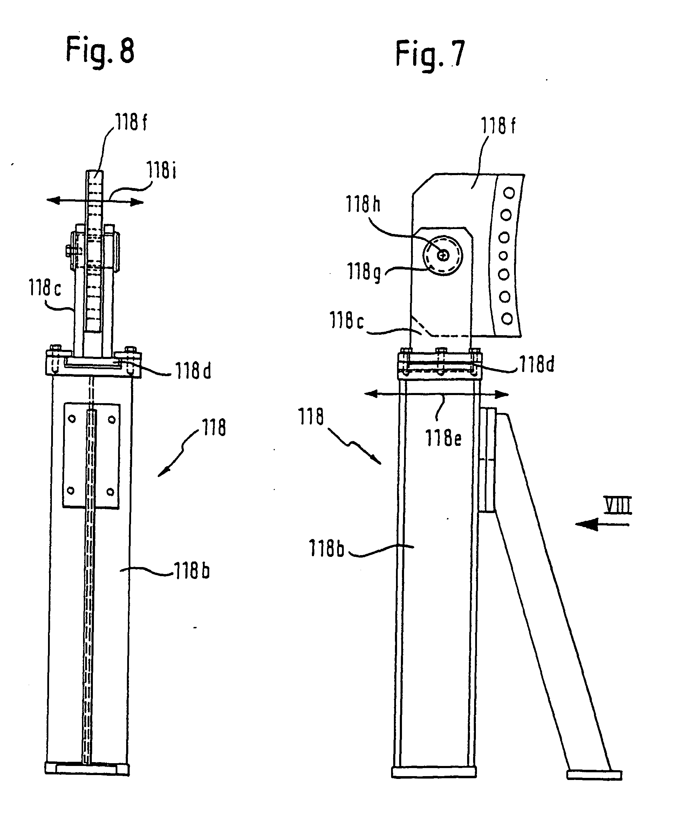

Eine weitere Besonderheit der Abstützung des Filtergehäuses 1 10 liegt darin, dass in den Stützböcken 118 Ausgleichsmittel zum Ausgleich von Durchmesserveränderungen des Filtergehäuses 110 vorgesehen sind. Diese Ausgleichsmittel sind im Einzelnen in den Fig. 7 und 8 dargestellt. Man erkennt, dass ein Abstützbock 118 aus einem mit dem Grundrahmen 113 zu verbindenden Stützbockunterteil 118b und einem Stützbockoberteil 11 8c zusammengesetzt ist, die durch eine Schiebeverbindung 118d miteinander verbunden sind, wobei diese Schiebeverbindung 118d eine Verschiebbarkeit der beiden Bockteile 118b und 118c relativ zueinander in Pfeilrichtung 11 8e gestattet. Eine Durchmesserveränderung des Filtergehäuses 110 wird demnach in der Schiebeverbindung 118d ausgeglichen.

Bedenkt man, dass hohe Temperaturen des Filtrierguts vorkommen können, so muss man auch mit der Möglichkeit einer Längsausdehnung des Filtergehäuses 110 rechnen. Aus diesem Grund sind an mindestens einem der beiden Stützbockpaare 118-118' Längsausgleichsmittel vorgesehen. Der Flansch 118f, der zum Anschluss an den Endring 116 des Filtergehäuses 110 bestimmt ist, ist mit einem Gelenkauge 118g auf einem Gelenkbolzen 118h drehbar und in Pfeilrichtung 118i verschiebbar gelagert.

Aus Fig. 6 kann man erkennen, dass der Kuchenauswurfschacht 164 annähernd im Sohlenbereich des Filtergehäuses 110 angeordnet ist. Dennoch ist ein guter Zugang zu diesem Kuchenauswurfschacht 164 möglich, dank der seitlichen Anordnung der Abstützböcke 118.

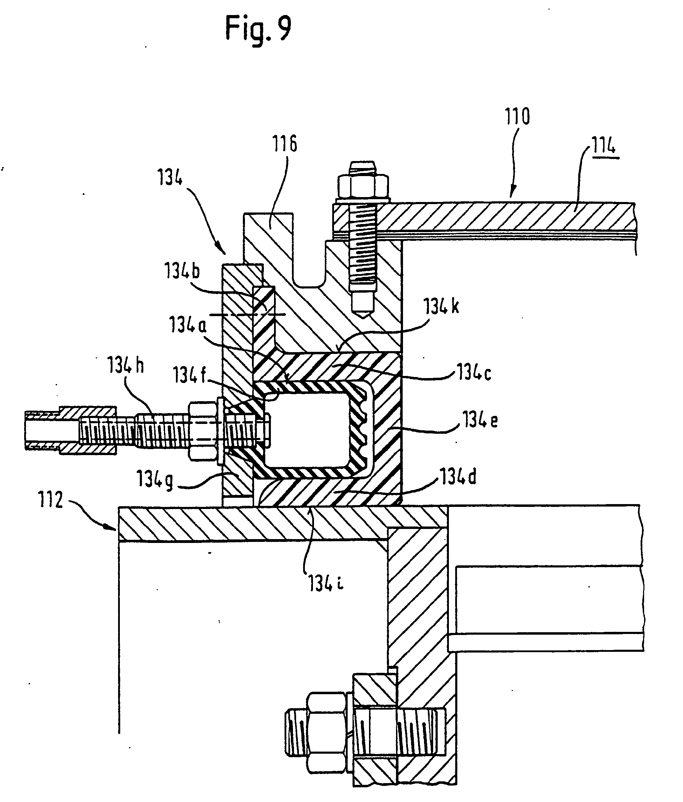

Eine weitere Besonderheit der erfindungsgemäßen Gestaltung der erfindungsgemäßen Drehfilteranlage liegt in der Abdichtung des Zwischenraums 130. Während in der zum Stand der Technik gehörigen Drehfilteranlage gemäß den Fig. 1 - 3 als Abdichtung an den axial beabstandeten Enden des Zwischenraums 30 Stopfbuchsenanordnungen angedeutet sind, wird bei der in den Fig. 4 - 11 beschriebenen erfindungsgemäßen Ausführungsform die Dichtungsbaugruppe verwendet, welche in Fig. 9 im Einzelnen dargestellt ist. Gemäß Fig. 9 ist die Dichtungsbaugruppe 134 an einem Endring 116 des Filtergehäuses 110 drehfest angeordnet. Die Dichtungsbaugruppe 134 umfasst einen Ringkörper 134a mit U-Profil, welcher mittels eines Befestigungsflansches 134b an dem Endring 116 befestigt ist und zwei U-Schenkel 134c und 134d aufweist, so dass der U-Quersteg 134e dem Zonentrennmittel zugekehrt ist. Zwischen den beiden U-Schenkeln 134c und 134d ist ein torischer Blähkörper 134f aufgenommen, der über eine Abdeckplatte 134g an dem Endring 116 befestigt und durch diese hindurch mit einem Blähfluidanschluss 134h verbunden ist. Durch Aufblähen des Blähkörpers 134f bei Druckmittelzuführung wird der U-Schenkel 134d dichtend gegen eine zylindrische Dichtfläche 134i angelegt, wobei sich gleichzeitig auch der U-Schenkel 134c gegen eine Dichtfläche 1 34k des Endrings 116 dicht anlegt. Es wird hier eine praktisch wartungsfreie Abdichtung erzielt. Der Ringkörper 134a ist aus Kunststoff hergestellt, beispielsweise aus Polyamid. Im Einzelnen erfolgt die Auswahl des Kunststoffs in Anpassung an die jeweils vorkommenden Prozessmedien, so dass der Kunststoff gegen diese möglichst resistent ist. Die Dichtstelle zwischen der Dichtfläche 134e und dem U-Schenkel 134d kann mit einer Flüssigkeit gekühlt und/oder geschmiert werden, welche dem jeweiligen Prozessmedium verwandt ist.

In dem Detail der Fig. 10 entsprechend dem Teilbereich X der Fig. 1 erkennt man Einzelheiten der erfindungsgemäßen Gestaltung des Filterrotors 110 und des Filtergehäuses 112.

Die beiden bilden zusammen den Zwischenraum 130.

Das Filtergehäuse 110 ist aus den Endringen 116 und den Skelettstäben 110a aufgebaut, die zusammen einen Skelettrahmen 116-110a bilden. Zwischen jeweils zwei aufeinander in Umfangsrichtung folgenden Skelettstäben 110a sind Skelettfenster 110b gebildet, die wenigstens zum Teil untereinander gleiche Innenabmessungen besitzen. Vorzugsweise sind auch die Abstände 110c zwischen aufeinander folgenden Skelettfenstern 110b untereinander gleich.

In die Skelettfenster 110b können Füllstücke eingesetzt werden, die verschiedene Funktionen erfüllen. Man erkennt in Fig. 10 eine erste Gruppe von Füllstücken, welche als Zonentrennmittel 132 ausgebildet sind. Im Einzelnen sind diese Zonentrennmittel 132 als Trennplatten aufgebaut mit einem Leistenkörper 132a aus Kunststoff. Der Kunststoff ist dabei so gewählt, dass er resistent gegen das jeweilige Prozessmedium ist, also insbesondere gegen das Filtriergut FG.

Der Leistenkörper 132a ist mit einer ringsum laufenden Dichtschnur 132b versehen, welche gegen den Innenumfang des Skelettfensters 110b anliegt. An der dem Filterrotor 112 zugekehrten Seite des Leistenkörpers 132a ist eine Dichtschicht 132c angebracht, die wiederum aus Kunststoff hergestellt sein kann und zur Anlage gegen die Innenumfangsfläche der Skelettfenster 110b und gegen die Kopfflächen von Rippen 1 28a der in Fig. 3 dargestellten Zellstruktur bestimmt ist. Zusätzlich zu der Dichtschnur 132c kann eine weitere Dichtfunktion von einer Dichtmembran 132d ausgeübt werden, welche an der radial äußeren Seite des Leistenkörpers 1 32a anliegt und in der Umfangsfläche des jeweiligen Skelettfensters 110b dicht verankert ist. Um eine gute Abdichtung zwischen der in Fig. 10 dargestellten Zwischenraumzone Z2 des Zwischenraums 130 und dem angrenzenden Zwischenraum Z1 (siehe Fig. 1) herzustellen, muss der Leistenkörper 132a mit der Dichtschicht 132c gegen die Kopfflächen der Rippen 128a angedrückt werden. Zu diesem Zweck liegt über der Dichtmembran 132d ein Kissen 132e, das mit einer nicht dargestellten Armatur zur Einleitung eines Aufblähfluids versehen ist und das sich an seiner radial äußeren Seite gegen einen Stützkasten 132f abstützt. Der Stützkasten 132f ist an einer Abdeckung 115 befestigt, auf die noch näher einzugehen sein wird. Der Anpressdruck der Dichtschicht 132c gegen die Kopfflächen der Rippen 128a und damit die Trenn- und Dichtwirkung zwischen aufeinander folgenden Zwischenraumzonen Z1-Z4 kann durch entsprechende Bemessung des Fluiddrucks in dem Kissen 132d bestimmt werden. Die Membran 132d wird dabei so schlaff gehalten, dass sie die Größe des Anpressdrucks gegen die Kopfflächen der Rippen 128a nicht wesentlich beeinflusst. Auf diese Weise ist sichergestellt, dass aufeinander folgende Zwischenraumzonen Z1, Z2 und Z3 ständig optimal voneinander getrennt sind, auch dann, wenn in aufeinander folgenden Zwischenraumzonen Z1,Z2,Z3 unterschiedliche Drücke herrschen und wenn die Positionierung des Filterrotors 112 durch Abnutzung des Rotorlagers 122 an Genauigkeit verloren hat.

Als weiteres Füllstück ist in Fig. 10 ein Armaturenfüllstück 117 dargestellt, welches an die Anschlussarmatur A2 für das Waschmedium anschließt. Auch dieses Armaturenfüllstück 117 kann aus einem gegen das jeweilige Prozessmedium resistenten Kunststoff hergestellt und gegen die Innenumfangsfläche des jeweiligen Skelettfensters 110b abgedichtet sein.

Man erkennt in der Fig. 10 ferner eine Mehrzahl von Sprühdüsen 119, die teils an dem Skelettrahmen 116-110a befestigt sind, teilweise an der Abdeckung 115. Die Abdeckung 115 kann insgesamt als eine dichte Abdeckung gestaltet sein, die einen zusätzlichen Schutz gegen Austritt von Prozessmedium bildet, zusätzlich nämlich zu der Abdichtung, die bereits durch den Skelettrahmen 116-110a und die in den Skelettrahmen 116-110a eingesetzten Füllstücke 132 und 117 besteht. Im Beispielsfall der Fig. 10 ist die Abdeckung 115 durch Abdecksegmente 115a, die einzeln an dem Skelettrahmen 116-110a angebracht und durch Schnellverschlüsse 115b befestigt sind. Dank der Schnellverschlüsse 115b kann das Abdeckungssegment 115a, im Folgenden Deckel 115a genannt, leicht abgenommen werden, beispielsweise dann, wenn Wartungs- oder Reparaturarbeiten an einem Zonentrennmittel 132 auszuführen sind. Es ist auch denkbar, einen Deckel 115a als Klappdeckel auszubilden, etwa mit einer Schwenkachse 115c und Schnellverschlüssen 115b demgemäß nur an den in Umfangsrichtung verlaufenden Kanten des Deckels 115a und an der der Schwenkachse 11 5c in Umfangsrichtung gegenüber liegenden achsparallelen Kante.

Durch eine ringsum laufende Abdichtschnur 11 5d ist angedeutet, dass der Deckel 115a eine zusätzliche Abdichtfunktion übernimmt, indem er dicht an dem Skelettrahmen 116-110a anliegt.

Die Abdeckung 115 kann über den ganzen Umfang verteilt aus analogen Deckeln 115a aufgebaut sein. Es ist auch denkbar, dass ein Teil der Abdeckung 115 unlösbar an dem Skelettrahmen 116-110a befestigt ist, dort nämlich, wo Zugänglichkeit zu dem Skelettrahmen 116-110a nicht gefordert ist. Es wäre weiter denkbar, Deckel unmittelbar auf den Füllstücken 132 und 117 anzubringen. In diesem Falle entfällt zwar die zusätzliche Abdichtfunktion der Abdeckung. Gleichwohl können die Deckel dann als Träger von Funktionsteilen, wie z.B. der Anschlussarmatur A2, verwendet werden.

Im Falle der in Fig. 10 dargestellten speziellen Ausführungsform ist die Anschlussarmatur A2 an dem Deckel 11 5a befestigt und liegt mit einem Rohrstück 121 unter Vermittlung einer Dichtung 123 an dem Armaturenfüllstück 117 an.

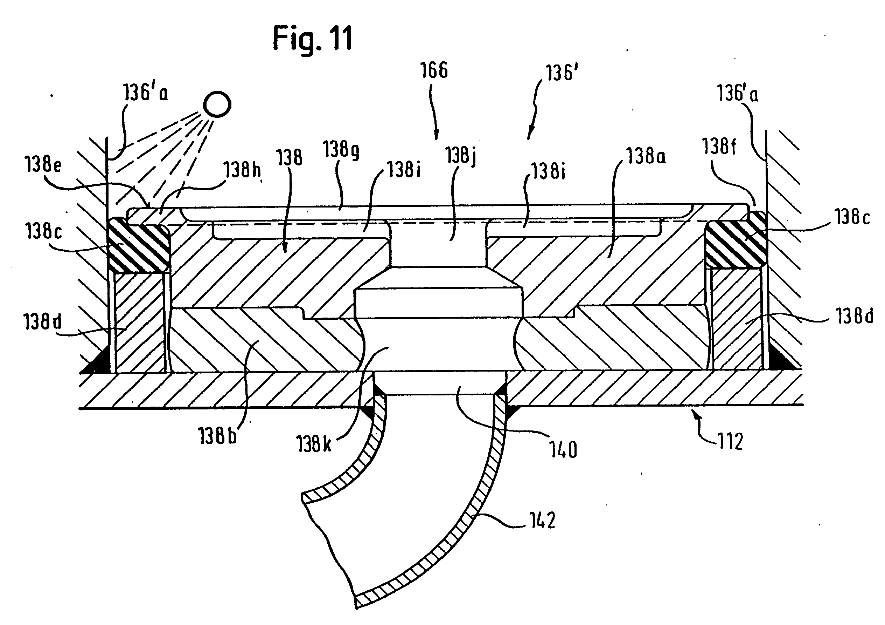

In der Fig. 11 sind Details einer Filterzelle 136' entsprechend Fig. 3 dargestellt und insbesondere die Details eines in eine Filterzelle 136' eingesetzten Filtermittels 138. Das Filtermittel 138 umfasst einen Trägerrahmen 138a, welcher gegen den Filterrotor 112 nach radial innen durch eine Zwischenplatte 138b abgestützt ist und durch einen Dichtring 138c gegen die Zellenumfassungswand 136'a der Zelle 136' abgedichtet ist. Der Dichtring 138 liegt dabei auf einer Stützkonstruktion 138d auf. Zu beachten ist, dass der Dichtring 138c bis annähernd an eine Stirnfläche 138e des Trägerrahmens 138a heranreicht, so dass zwischen dem Trägerrahmen 138a und der Zellenumfassungswand 136'a allenfalls ein Spalt 138f von sehr geringer radialer Tiefe besteht, in dem sich Rückstände leicht lösen lassen, z.B. durch die bereits erwähnte Waschdüse 168.

Der Trägerrahmen 138a ist mit einem aus Metallfäden gebildeten Filtergewebe 138g ausgeführt, das bei 138h mit dem Trägerrahmen 138a verschweißt ist. Unterhalb des Filtergewebes 138g sind reliefartige Filtratabführkanäle 138i in dem Trägerrahmen 138a ausgebildet, die zu einem Filtratabfluss 138j führen. Der Filtratabfluss 138j steht über eine Öffnung 138k der Zwischenplatte 138b in Verbindung mit der Abführöffnung 140.

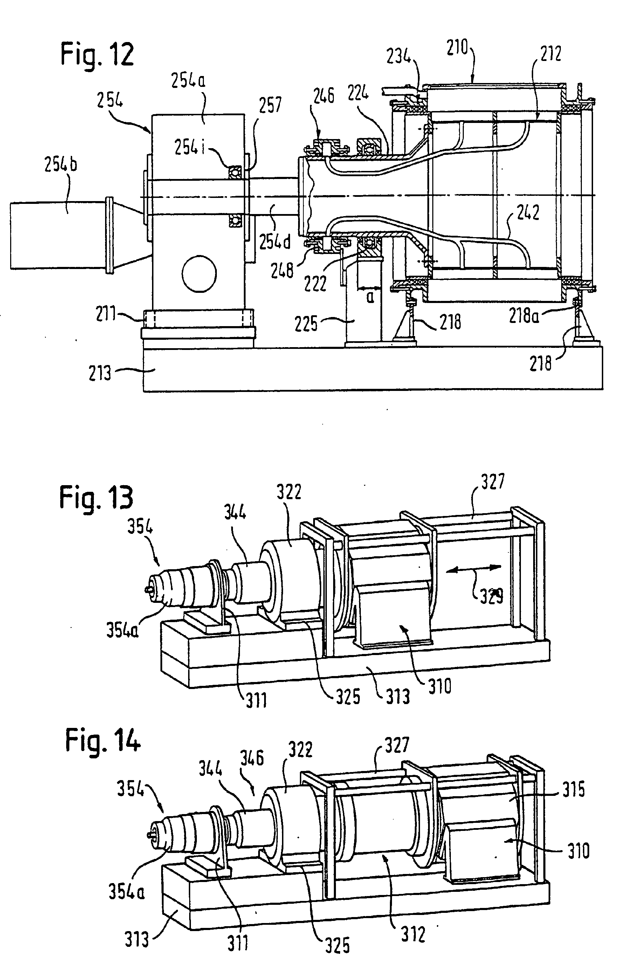

In Fig. 12 ist eine weitere Ausführungsform dargestellt, die sich von der Ausführungsform nach den Fig. 4 - 11 durch eine veränderte Lagerung des Filterrotors 212 unterscheidet. Analoge Teile sind mit gleichen Bezugszeichen versehen wie in den Fig. 4 - 11, jeweils vermehrt um die Zahl 100.

In der Ausführungsform nach Fig. 12 ist der Filterrotor 212 durch eine einzige Rotorlagerung 222 gelagert, und zwar auf der in der Figur linken Seite des Filtergehäuses 210. Die Rotorlagerung 222 ist dabei durch eine gesonderte Rotorlagerabstützung 225 auf dem Grundrahmen 213 abgestützt. An dem in der Fig. 12 rechten Ende des Filtergehäuses 210 ist keine Lagerung für den Filterrotor 212 vorgesehen. Man spricht daher von einer "fliegenden Lagerung" des Filterrotors 212. Die Rotorlagerung 222 ist in ihrer axialen Ausdehnung relativ groß und kann aus mehreren Kugellagern, Rollenlagern oder Kegelrollenlagern zusammengesetzt sein, so dass Biegemomente infolge des Eigengewichts des Filterrotors 212 und infolge von asymmetrisch verteilten Drücken der Prozessmedien aufgenommen werden können. Bei dieser Ausführungsform ist dank der gesonderten Rotorlagerabstützung 225 die Einleitung von Lagerkräften in das Filtergehäuse 210 unterdrückt. Das Filtergehäuse 210 kann deshalb, auch wenn es erheblichen hydrostatischen Drücken in einzelnen Zwischenraumzonen Z1 - Z4 ausgesetzt ist, relativ leicht gebaut werden.

Zu beachten ist, dass die Drehverbindungsbaugruppe 246 auf der vom Filtergehäuse 210 abgelegenen Seite der Rotorlagerung 222 angeordnet ist, so dass die Rotorlagerung 222 nahe an das Filtergehäuse 210 herangerückt werden kann. Die Getriebeausgangswelle 254d ist innerhalb des Getriebegehäuses 254a durch eine Abtriebsgliedlagerung 254i gelagert. Deswegen können keine nicht ausgeglichenen Radialkräfte, die aus dem Getriebe 254 auf die Getriebeausgangswelle 254d etwa ausgeübt werden, auf den Endabschnitt 224 des Filterrotors 212 übertragen werden. Im übrigen entspricht die Ausführungsform nach Fig. 12 hinsichtlich des Aufbaus von Filterrotor 212 und Filtergehäuse 210 der Ausführungsform nach den Fig. 4 - 11.

Die Ausführungsform nach den Fig. 13 und 14 entspricht hinsichtlich der fliegenden Lagerung des Filterrotors der Ausführungsform nach Fig. 12. Analoge Teile sind mit gleichen Bezugszeichen versehen wie in Fig. 12, jeweils weiter vermehrt um die Zahl 100.

In dieser Ausführungsform ist das Filtergehäuse 310 auf einem Verschiebegerüst 327 in Richtung des Pfeiles 329 in Richtung der Filterrotorachse A verschiebbar zwischen einer Betriebsstellung gemäß Fig. 13 und einer Verschiebestellung gemäß Fig. 14. Das Verschiebegerüst 327 ist wiederum auf dem Grundrahmen 313 abgestützt.

Hinsichtlich der Rotorlagerung 322 und Rotorlagerabstützung 325 gilt im übrigen das zu Fig. 12 Gesagte. Hinsichtlich der Konstruktion und der Betriebsweise des Filterrotors 312 und des Filtergehäuses 310 gilt das im Zusammenhang mit den Fig. 4 - 11 Gesagte.

Wenn es sich als notwendig erweist, an dem Filterrotor 312 und/oder an dem Innenraum des Filtergehäuses 310 Reparatur- oder Wartungsmaßnahmen vorzunehmen, so wird das Filtergehäuse 310 in die Stellung gemäß Fig. 14 verschoben. Dies ist dank der fliegenden Lagerung des Filterrotors 312 in der Rotorlagerung 322 ohne weiteres möglich. Auch die Dichtungsbaugruppen, welche den Zwischenraum zwischen Filterrotor 312 und Filtergehäuse 310 in der Betriebsstellung gemäß Fig. 13 beidendig abdichten, behindern das Verschieben des Filtergehäuses 310 nicht, wenn diese Dichtungsbaugruppen entsprechend der Fig. 9 aufgebaut sind. Man braucht nur den Druck aus den torischen Blähkörpern 134f (Fig. 9) abzulassen und kann dann das Filtergehäuse 310 ohne wesentliche Reibung in den Dichtungsbaugruppen verschieben. Der Filterrotor 312 bleibt ohnehin an Ort und Stelle, so dass sich auch im Bereich der Rotorlagerung 322 und im Bereich der Drehverbindungsbaugruppe 346 keine Probleme wegen der Verschiebbarkeit des Filtergehäuses 310 ergeben.

Man erkennt aus Fig. 14, dass der Filterrotor 312 frei liegt. Im übrigen ist der Innenraum des Filtergehäuses 310 von seinem rechten Ende her zugänglich, wenn das Filtergehäuse 310 in die Stellung gemäß Fig. 14 verschoben ist.

Die Verschiebbarkeit des Filtergehäuses 310 gemäß Fig. 13 und 14 kann mit einem Aufbau der Abdeckung 315, d.h. mit lösbaren oder abschwenkbaren Deckeln kombiniert werden, um dadurch unter Umständen die Zugänglichkeit zu einzelnen Funktionsteilen der Drehfilteranlage weiter zu erleichtern.

Hinsichtlich der statischen Verhältnisse der Rotorlagerung 322 und Rotorlagerabstützung 325 sowie der Gehäuseabstützung gilt das in Zusammenhang mit Fig. 12 Gesagte.

## Patentansprüche

1. Drehfilteranlage, umfassend ein Filtergehäuse (110,210,3101 mit einer Gehäusemanteleinheit (114),
einen um eine Rotorachse (A) drehbaren, innerhalb des Filtergehäuses (110,210,310) aufgenommenen Filterrotor (112,212,312) mit einer Rotormanteleinheit (128),
einen Zwischenraum (130) zwischen der Rotormanteleinheit (128) und der Gehäusemanteleinheit (114),
wobei die Rotormanteleinheit (128) eine Mehrzahl von in Umfangsrichtung aufeinander folgenden Filterzellen (136',136") oder Filterzellengruppen (136) aufweist,
wobei weiter in einzelnen Filterzellen (136',136") jeweils ein zum Zwischenraum (130) hin sich öffnender Zuführungsraum (166) durch ein Filtermittel (138) von einem mit dem Filterrotor (112,212,312) umlaufenden Abführleitungssystem getrennt ist, dem seinerseits über eine Drehverbindungsbaugruppe (146,246,346) ein stationäres Abführleitungssystem nachgeschaltet ist,
wobei weiter der Zwischenraum (130) durch Zonentrennmittel (132) in eine Mehrzahl von in Umfangsrichtung aufeinander folgende Zwischenraumzonen (Z1,Z2,Z3,Z4) unterteilt ist, welche bei Umlauf des Filterrotors (112,212,312) nacheinander mit verschiedenen Filterzellen (136', 136") oder Filterzellengruppen (136) in Verbindung kommen und mindestens z.T. in Verbindung mit einem stationären Zuführleitungssystem stehen, so dass mindestens eine stationäre Zuführleitung des stationären Zuführleitungssystems über eine ihr zugehörige stationäre Zwischenraumzone (130) und jeweils mindestens eine der nacheinander an dieser Zwischenraumzone (130) vorbei wandernden Filterzellen (136',136") oder Filterzellengruppen (136) und den einzelnen Filterzellen (136',136") bzw. Filterzellengruppen (136) jeweils zugeordnete, umlaufende Abführleitungen (142,242) des umlaufenden Abführleitungssystems in Verbindung mit einer dieser stationären Zuführleitung zugeordneten stationären Abführleitung (152) des stationären Abführleitungssystems steht,
wobei weiter der Filterrotor (112,212,312) durch eine Rotorlagerung (122,222,322) gelagert und diese Rotorlagerung (122,222,322) durch eine Rotorlagerabstützung (225,325) stationär abgestützt ist,
wobei weiter der Filterrotor (112,212,312) von einem Antriebsmotor (154b,254b) her über eine Getriebeeinheit (154,254,354) antreibbar ist, welche ein im wesentlich koaxial zum Filterrotor (112,212,312) angeordnetes und mit dem Filterrotor (112,212,312) zur gemeinsamen Drehung um die Rotorachse (A) verbundenes Abtriebsglied (154d,254d) aufweist,
**gekennzeichnet durch**
mindestens eine der zwei Merkmalsgruppen:
a) das Abtriebsglied (154d,254d) ist in einer zusätzlichen Lagerung, im folgenden genannt "Abtriebsgliedlagerung" gelagert, welche **durch** eine von der Rotorlagerabstützung (225,325) gesonderte Abtriebsgliedlagerabstützung (111,211,311) stationär abgestützt ist;
b) das Abtriebsglied (1 54d,254d) wird von einer Gruppe von treibenden Rädern angetrieben, welche derart über den Umfang des Abtriebsglieds (154d,254d) verteilt sind, dass die Radialkomponenten der von diesen treibenden Rädern auf das Abtriebsglied (154d,254d) übertragenen Kräfte sich wenigstens teilweise aufheben.

2. Drehfilteranlage nach Anspruch 1,
**dadurch gekennzeichnet,**
**dass** die Rotorlagerung (222,322) vermittels der Rotorlagerabstützung (225,325) und die Abtriebsgliedlagerung vermittels der Abtriebsgliedlagerabstützung (211,311) auf einem gemeinsamen Fundament oder Grundrahmen (213,313) abgestützt sind.

3. Drehfilteranlage nach Anspruch 1 oder 2,
**dadurch gekennzeichnet,**
**dass** die Getriebeeinheit (154,254,354) ein Getriebegehäuse (1 154a, 254a,354a) umfasst, in welchem auch das Getriebeabtriebsglied (154d,254d) gelagert ist und dass dieses Getriebegehäuse (154a,254a,354a) durch eine Getriebegehäuseabstützung (111,211,311) stationär abgestützt ist.

4. Drehfilteranlage nach einem der Ansprüche 1 - 3,
**dadurch gekennzeichnet,**
**dass** die Getriebeeinheit (154,254,354) mindestens eine Planetengetriebestufe (154) umfasst und dass das Getriebeabtriebsglied (154d,254d) der Planetengetriebestufe (154) zugehört.

5. Drehfilteranlage nach einem der Ansprüche 1 - 4,
**dadurch gekennzeichnet,**
**dass** die Rotorlagerung (122,222,322) wenigstens z.T. an dem Getriebegehäuse (154a,254a,354a) befestigt ist und vermittels des Getriebegehäuses (154a,254a,354a) stationär abgestützt ist.

6. Drehfilteranlage nach einem der Ansprüche 1 - 4,
**dadurch gekennzeichnet,**
**dass** die Rotorlagerung (122,222,322) durch eine Rotorlagerabstützung (225,325) abgestützt ist, welche das Filtergehäuse (110,210,310) von Stützkräften im wesentlichen freihält.

7. Drehfilteranlage nach einem der Ansprüche 1 - 6,
**dadurch gekennzeichnet,**
**dass** die Rotorlagerung (122) in längs der Rotorachse beabstandeten Endbereichen des Filtergehäuses (110) je eine Lagerstelle aufweist.

8. Drehfilteranlage nach einem der Ansprüche 1 - 6,
**dadurch gekennzeichnet,**
**dass** die Rotorlagerung (222,322) auf den der Getriebeeinheit (254,354) nahen Endbereich des Filtergehäuses (210,310) beschränkt ist.

9. Drehfilteranlage nach einem der Ansprüche 1 - 8,
**dadurch gekennzeichnet,**
**dass** die Rotorlagerung (122,222,322) mindestens ein Wälzlager oder mindestens eine Gruppe von Wälzlagern aufweist.

10. Drehfilteranlage nach einem der Ansprüche 1 - 9,
**dadurch gekennzeichnet,**
**dass** das Abtriebsglied (154d,254d) der Getriebeeinheit (254,354) mit dem Filterrotor (212,312) über eine zumindest in Richtung orthogonal zur Rotorachse (A) nachgiebige Ausgleichskupplung (157,257) verbunden ist.

11. Drehfilteranlage nach einem der Ansprüche 1 - 10,
**dadurch gekennzeichnet,**
**dass** die Drehverbindungsbaugruppe (146,246,346) in Richtung der Rotorachse (A) zwischen dem Filtergehäuse (110,210,310) und der Abtriebsgliedlagerung angeordnet ist.

12. Drehfilteranlage nach Anspruch 11,
**dadurch gekennzeichnet,**
**dass** die Drehverbindungsbaugruppe (146,246,346) auf der filtergehäusefernen Seite einer Rotorlagerstelle der Rotorlagerung (122,222,322) angeordnet ist.

13. Drehfilteranlage nach einem der Ansprüche 1 - 12,
**dadurch gekennzeichnet,**
**dass** die Filtergehäuseabstützung (118,218) mindestens in einem Endbereich des Filtergehäuses (110,210) eine Mehrzahl von über den Umfang des Filtergehäuses (110,210) annähernd gleichmäßig verteilten Abstützstellen (118a,218a) umfasst.

14. Drehfilteranlage nach einem der Ansprüche 1 - 13,
**dadurch gekennzeichnet,**
**dass** mindestens einem Teil der Abstützstellen (118a,218a) Ausgleichsmittel (118d) zum Ausgleich von Durchmesserveränderungen der Gehäusemanteleinheit (114) zugeordnet sind.

15. Drehfilteranlage nach Anspruch 14,
**dadurch gekennzeichnet,**
**dass** an zwei längs einer horizontalen Diametrallinie D beabstandeten Abstützstellen (118a,218a) je eine Abstützsäule (118) oder ein Abstützbock für das Filtergehäuse (210,310) vorgesehen sind.

16. Drehfilteranlage nach einem der Ansprüche 1 - 15,
**dadurch gekennzeichnet,**
**dass** die Filtergehäuseabstützung (118,218) Ausgleichsmittel (118g, 118h) für Längenveränderungen des Filtergehäuses (210,310) in Richtung der Rotorachse (A) aufweist.

17. Drehfilteranlage nach einem der Ansprüche 1 - 16,
**dadurch gekennzeichnet,**
**dass** der Zwischenraum (130) zwischen der Rotormanteleinheit (128) und der Gehäusemanteleinheit (114) in der Nähe mindestens eines axialen Endes dieser Einheiten durch eine Dichtungsbaugruppe (134,234) abdichtbar ist, welche durch einen mittels Druckfluid aufblähbaren Torus (134f) in Dichtberührung mit einer Dichtfläche (134i,134k) mindestens einer der beiden Einheiten (114,128) bringbar ist.

18. Drehfilteranlage nach Anspruch 17,
**dadurch gekennzeichnet,**
**dass** die Dichtungsbaugruppe (134,234) stationär mit der Gehäusemanteleinheit (114) verbunden ist und gegen eine mit der Rotormanteleinheit (128) rotierende Dichtfläche (134i) andrückbar ist.

19. Drehfilteranlage nach Anspruch 18,
**dadurch gekennzeichnet,**
**dass** die Dichtungsbaugruppe (134,234) ein im Querschnitt im wesentlichen U-förmiges Rinnenprofil umfasst, welches gegenüber der Gehäusemanteleinheit (114) mit einem ersten U-Schenkel (134c) festgelegt ist, mit einem zweiten U-Schenkel (134d) gegen die Dichtfläche (134i) der Rotormanteleinheit (128) dichtend andrückbar ist und zwischen den beiden U-Schenkeln (134c, 134d) einen torischen Blähkörper (1 34f) aufnimmt, welcher an der Gehäusemanteleinheit (114) stationär angeordnet und mit einer Druckfluidquelle verbunden ist.

20. Drehfilteranlage nach einem der Ansprüche 17- 19,
**dadurch gekennzeichnet,**
**dass** die Dichtungsbaugruppe (134,234) an einem Endring (116) eines annähernd zylindrischen Rahmens des Filtergehäuses (110,210,310) angebracht ist.

21. Drehfilteranlage nach einem der Ansprüche 1 - 20,
**dadurch gekennzeichnet,**
**dass** das Filtergehäuse (110,210,310) einen annähernd zylindrischen Skelettrahmen (116-110a) umfasst mit mindestens zwei endständigen Skelettringen (116) und zwischen den Skelettringen (116) parallel zur Drehachse (A) verlaufenden Skelettstäben (110a), wobei dieser Skelettrahmen (116-110a) eine Grundstruktur der Gehäusemanteleinheit (114) bildet und wobei in Skelettfenster (110b) zwischen aufeinander folgenden Skelettstäben (110a) Füllstücke als Träger von Funktionsteilen der Filteranlage einsetzbar sind.

22. Drehfilteranlage nach Anspruch 21,
**dadurch gekennzeichnet,**
**dass** mindestens einem Skelettfenster (110b) ein Deckel (115a) zugeordnet ist.

23. Drehfilteranlage nach Anspruch 22,
**dadurch gekennzeichnet, dass** der Deckel (115a) Träger mindestens eines Funktionsteils der Filteranlage ist, welcher gewünschtenfalls mit einem Füllstück (117,132) oder einem von einem Füllstück (117,132) getragenen Funktionsteil der Filteranlage zusammenwirkt.

24. Drehfilteranlage nach Anspruch 22 oder 23,
**dadurch gekennzeichnet,**
**dass** ein Deckel (115a) auf die Abdeckung eines einzigen Füllstücks (117,132) beschränkt ist.

25. Drehfilteranlage nach Anspruch 22 oder 23,
**dadurch gekennzeichnet,**
**dass** ein Deckel (115a) zur Abdeckung mehrerer Füllstücke (117,132) ausgebildet ist.

26. Drehfilteranlage nach einem der Ansprüche 22 - 25,
**dadurch gekennzeichnet,**
**dass** ein Deckel (115a) durch Anlenk- oder/und Befestigungsmittel (115b) an dem Skelettrahmen (116-110a) feststellbar ist.

27. Drehfilteranlage nach einem der Ansprüche 22 - 25,
**dadurch gekennzeichnet,**
**dass** der Deckel (115a) durch Anlenk- oder/und Befestigungsmittel (115b) an einem Füllstück (117,132) feststellbar ist.

28. Drehfilteranlage nach einem der Ansprüche 22 - 27,
**dadurch gekennzeichnet,**
**dass** der Deckel (115a) um eine zur Rotorachse parallele Schwenkachse (115c) schwenkbar ist.

29. Drehfilteranlage nach einem der Ansprüche 22 - 28,
**dadurch gekennzeichnet,**
**dass** der Deckel (115a) Teil einer ringförmig geschlossenen Abdeckung (115) der Gehäusemanteleinheit (114) ist.

30. Drehfilteranlage nach einem der Ansprüche 1 - 29,
**dadurch gekennzeichnet,**
**dass** der Zwischenraum (130), das Zuführleitungsystem, das umlaufende Abführleitungssystem (142,242) und das stationäre Abführleitungssystem gegen Austritt von Filterprozessmedien und gegen Eintritt von Verschmutzung, insbesondere Schmiermittel, abgedichtet sind.

31. Drehfilteranlage nach einem der Ansprüche 1 - 30,
**dadurch gekennzeichnet,**
**dass** ein Zonentrennmittel (132) von einer Trennplatte gebildet ist, an deren der Rotormanteleinheit (128) ferner Seite eine druckfluidbeaufschlagte Membran (132d) oder ein druckfluidbeaufschlagtes Kissen (132e) anliegt.

32. Drehfilteranlage nach einem der Ansprüche 1 - 31,
**dadurch gekennzeichnet,**
**dass** die Zonentrennmittel (132) eine Trennplatte mit einem Leistenkörper (132a) aus Kunststoff und einer an dem Leistenkörper (132a) angebrachten Dichtschicht (132c) umfassen.

33. Drehfilteranlage nach einem der Ansprüche 1 - 32,
**dadurch gekennzeichnet,**
**dass** ein einer Filterzelle (136',136") zugeordnetes Filtermittel (138) einen an seinem Umfang gegen eine Zellenumfassungswand (136'a) abgedichteten Trägerrahmen (138a), vorzugsweise einen Trägerrahmen (138a) aus Kunststoff, für ein Filtergewebe (138g), Sieb oder dgl. umfasst, wobei ein zur Abdichtung eingesetzter Dichtring (1 38c) den Zwischenraum zwischen einer Umfangsfläche des Trägerrahmens (138a) und der Zellenumfassungswand (136'a) annähernd bis auf die Höhe einer filtriergutseitigen umfangsnahen Stirnfläche (138e) des Trägerrahmens (138a) dichtend ausfüllt.

34. Drehfilteranlage nach einem der Ansprüche 1 - 33,
**dadurch gekennzeichnet,**
**dass** das Filtergewebe (138g) ein Metalldrahtgewebe ist, welches mit einem Trägerrahmen (138a) verschweißt ist.

35. Drehfilteranlage nach einem der Ansprüche 1 - 34,
**dadurch gekennzeichnet,**
**dass** das Filtergehäuse (210,310) zur wenigstens teilweisen Freilegung des Filterrotors (212,312) relativ zu dem Filterrotor (212,312) in Richtung der Drehachse (A) verschiebbar ist.

36. Drehfilteranlage nach Anspruch 35,
**dadurch gekennzeichnet,**
**dass** das Filtergehäuse (310) auf einem stationären Verschiebegerüst (327) verschiebbar geführt ist.

37. Drehfilteranlage nach einem der Ansprüche 1 - 36,
**dadurch gekennzeichnet,**
**dass** im Bereich von reinigungsbedürftigen Funktionsteilen Reinigungsdüsen (119) vorgesehen sind, die mit einer Reinigungsftuidversorgung verbunden sind.

38. Drehfilteranlage nach einem der Ansprüche 1 - 37,
**dadurch gekennzeichnet,**
**dass** eine Filterkuchenauswurfzone (Z4) im tiefstliegenden Bereich des Gehäusemantels (114) vorgesehen ist.

## Claims

1. A rotary filter system, comprising
a filter housing (110,210,310) with a housing casing unit (114), a filter rotor (112,212,312) rotatable about a rotor axis (A), accommodated inside the filter housing (110,210,310) and with a rotor casing unit (128),
a clearance (130) between the rotor casing unit (128) and the housing casing unit (114),
wherein the rotor casing unit (128) has a plurality of filter cells (136',136") or filter cell groups (136) succeeding one another in a peripheral direction,
wherein further in individual filter cells (136',136") in each case an intake chamber (166), opening towards the clearance (130), is separated by a filter medium (138) from a discharge duct system rotating with the filter rotor (112,212,312), a stationary discharge duct system being in turn connected downstream of the discharge duct system via a rotary connecting assembly (146,246,346),
wherein further the clearance (130) is subdivided by zonal separating means (132) into a plurality of clearance zones (Z1,Z2,Z3,Z4) which succeed one another in a peripheral direction and which, upon rotation of the filter rotor (112,212,312), come successively into communication with different filter cells (136',136") or filter cell groups (136) and are partly in communication with a stationary intake duct system so that at least one stationary intake duct of the stationary intake duct system is in communication via an associated stationary clearance zone (130) and in each case at least one of the filter cells (136',136") or filter cell groups (136) successively travelling past this clearance zone (130) and the individual filter cells (136',136") or filter cell groups (136) in each case via associated rotating discharge ducts (142,242) of the rotating discharge duct system with a stationary discharge duct (152), associated with this stationary intake duct, of the stationary discharge duct system,
wherein further the filter rotor (112,212,312) is mounted by a rotor mounting (122,222,322) and this rotor mounting (122,222,322) is supported in a stationary manner by a rotor mounting support (225,325),
wherein further the filter rotor (112,212,312) can be driven by a drive motor (154b,254b) via a gear unit (154,254,354) which has a driven member (154d,254d) arranged substantially coaxially to the filter rotor (112,212,312) and connected to the filter rotor (112,212,312) for common rotation about the rotor axis (A),
**characterised by**
at least one of the two feature groups:
a) the driven member (154d,254d) is mounted in an additional mounting, termed "driven member mounting" in the following, which is supported in a stationary manner by a driven member bearing support (111,211,311) separate from the rotor bearing support (225,325);
b) the driven member (154d,254d) is driven by a group of driving wheels which are spaced apart over the periphery of the driven member (154d,254d) in such a way that the radial components of the forces transmitted by these driving wheels are at least partly cancelled out.

2. A rotary filter system according to Claim 1, **characterised in**
**that** the rotor mounting (222,322) is supported by means of the rotor bearing support (225,325) and the driven member mounting is supported by means of the driven member bearing support (211,311) on a common foundation or base frame (213,313).

3. A rotary filter system according to Claim 1 or 2,
**characterised in**
**that** the gear unit (154,254,354) comprises a gear housing (154a, 254a,354a) in which the gear driven member (154d,254d) is mounted, and in that this gear housing (154a,254a,354a) is supported in a stationary manner by a gear housing support (111,211, 311).

4. A rotary filter system according to any one of Claims 1 to 3, **characterised in**
**that** the gear unit (154,254,354) comprises at least one planetary gear stage (154), and in that the gear driven member (154d,254d) belongs to the planetary gear stage (154).

5. A rotary filter system according to any one of Claims 1 to 4, **characterised in**
**that** the rotor mounting (122,222,322) is secured at least partly to the gear housing (154a,254a,354a) and is supported in a stationary manner by means of the gear housing (154a,254a,354a).

6. A rotary filter system according to any one of Claims 1 to 4, **characterised in**
**that** the rotor mounting (122,222,322) is supported by a rotor bearing support (225,325) which keeps the filter housing (110,210,310) substantially free of reaction forces.

7. A rotary filter system according to any one of Claims 1 to 6, **characterised in**
**that** the rotor mounting (122) has a respective bearing in end zones of the filter housing (110) spaced apart along the rotor axis.

8. A rotary filter system according to any one of Claims 1 to 6, **characterised in**
**that** the rotor mounting (222,322) is limited to the end zone of the filter housing (210,310) near the gear unit (254,354).

9. A rotary filter system according to any one of Claims 1 to 8, **characterised in**
**that** the rotor mounting (122,222,322) has at least one rolling bearing or at least one group of rolling bearings.

10. A rotary filter system according to any one of Claims 1 to 9, **characterised in**
**that** the driven member (154d,254d) of the gear unit (254,354) is connected to the filter rotor (212,312) via an balancing coupling (157,257) which is flexible at least in a direction orthogonal to the rotor axis (A).

11. A rotary filter system according to any one of Claims 1 to 10, **characterised in**
**that** the rotary connection assembly (146,246,346) is arranged in the direction of the rotor axis (A) between the filter housing (110,210,310) and the driven member mounting.

12. A rotary filter system according to Claim 11,
**characterised in**
**that** the rotary connection assembly (146,246,346) is arranged on the side of a rotor mounting of the rotor bearing (122,222,322) remote from the filter housing.

13. A rotary filter system according to any one of Claims 1 to 12, **characterised in**
**that** the filter housing support (118,218) comprises at least in an end zone of the filter housing (110,210) a plurality of support points (118a,218a) spaced apart approximately uniformly over the periphery of the filter housing (110,210).

14. A rotary filter system according to any one of Claims 1 to 13, **characterised in**
**that** at least one part of the support points (118a,218a) has equalising means (118d) for equalising variations in the diameter of the housing casing unit (114).

15. A rotary filter system according to Claim 14,
**characterised in**
**that** at two support points (118a,218a) spaced apart along a horizontal diametral line D a respective support column (118) or a support block for the filter housing (210,310) is provided.

16. A rotary filter system according to any one of Claims 1 to 15, **characterised in**
**that** the filter housing support (118,218) has equalising means (118g,118h) for equalising variations in the length of the filter housing (210,310) in the direction of the rotor axis (A).

17. A rotary filter system according to any one of Claims 1 to 16, **characterised in**
**that** the clearance (130) between the rotor casing unit (128) and the housing casing unit (114) can be sealed in the vicinity of at least one axial end of these units by a sealing assembly (134,234) which can be brought by a toroid (134f), which can be expanded by means of a pressure fluid, into sealing contact with a sealing surface (134i,134k) of at least one of the two units (114,128).

18. A rotary filter system according to Claim 17,
**characterised in**
**that** the sealing assembly (134,234) is connected in a stationary manner to the housing casing unit (114) and can be pressed against a sealing surface (134i) rotating with the rotor casing unit (128).

19. A rotary filter system according to Claim 18,
**characterised in**
**that** the sealing assembly (134,234) comprises a gulley-like profile of substantially U-shaped section, which is located with respect to the housing casing unit (114) by a first U-arm (134c), can be pressed fluidtightly with a second U-arm (134d) against the sealing surface (134i) of the rotor casing unit (128) and between the two U-arms (134c,134d) accommodates a toroidal expandable body (134f) which is arranged in a stationary manner on the housing casing unit (114) and is connected to a source of pressure fluid.

20. A rotary filter system according to any one of Claims 17 to 19, **characterised in**
**that** the sealing assembly (134,234) is mounted on an end ring (116) of an approximately cylindrical frame of the filter housing (110,210,310).

21. A rotary filter system according to any one of Claims 1 to 20, **characterised in**
**that** the filter housing (110,210,310) comprises an approximately cylindrical skeleton frame (116-110a) with at least two end skeleton rings (116) and skeleton rods (110a) extending between the skeleton rings (116) parallel to the axis of rotation (A), wherein this skeleton frame (116-110a) forms a base structure of the housing casing unit (114) and wherein in skeleton windows (110b) between succeeding skeleton rods (110a) filler pieces can be inserted as carriers for working components of the filter system.

22. A rotary filter system according to Claim 21,
**characterised in**
**that** a cover (115a) is associated with at least one skeleton window (110b).

23. A rotary filter system according to Claim 22,
**characterised in**
**that** the cover (115a) is a carrier for at least one working component of the filter system, which if desired co-operates with a filler piece (117,132) or with a working component of the filter system carried by a filler piece (117,132).

24. A rotary filter system according to Claim 22 or 23,
**characterised in**
**that** a cover (115a) is limited to the covering of a single filler piece (117,132).

25. A rotary filter system according to Claim 22 or 23,
**characterised in**
**that** a cover (115a) is designed to cover a plurality of filler pieces (117,132).

26. A rotary filter system according to any one of Claims 22 to 25, **characterised in**
**that** a cover (115a) can be located on the skeleton frame (116-110a) by articulating and/or fastening means (115b).

27. A rotary filter system according to any one of Claims 22 to 25, **characterised in**
**that** the cover (115a) can be located on a filler piece (117,132) by articulating and/or fastening means (115b).

28. A rotary filter system according to any one of Claims 22 to 27, **characterised in**
**that** the cover (115a) is pivotable about a pivot axis (115c) parallel to the rotor axis.

29. A rotary filter system according to any one of Claims 22 to 28, **characterised in**
**that** the cover (115a) is part of annularly closed covering (115) of the housing casing unit (114).

30. A rotary filter system according to any one of Claims 1 to 29, **characterised in**
**that** the clearance (130), the intake duct system, the rotating discharge duct system (142,242) and the stationary discharge duct system are sealed against the egress of filter processing media and against the ingress of contamination, in particular lubricant.

31. A rotary filter system according to any one of Claims 1 to 30, **characterised in**
**that** a zonal separating means (132) is formed by a separating plate, on the side of which remote from the rotor casing unit (128) abuts a diaphragm (132d) acted upon by pressure fluid or a cushion (132e) acted upon by pressure fluid.

32. A rotary filter system according to any one of Claims 1 to 31, **characterised in**
**that** the zonal separating means (132) comprise a separating plate with a strip member (132a) of plastics material and a sealing layer (132c) applied to the strip member (132a).

33. A rotary filter system according to any one of Claims 1 to 32, **characterised in**
**that** a filter medium (138) associated with a filter cell (136',136") comprises a support frame (138a) sealed on its periphery against a cell-enclosing wall (136'a), preferably a support frame (138a) of plastics material, for a filter fabric (138g), screen or the like, wherein a sealing ring (138c) used for sealing fills fluidtightly the clearance between a peripheral surface of the support frame (138a) and the cell-enclosing wall (136'a) approximately up to the height of an end face (138e) of the support frame (138a) near to the periphery on the filtration material side.

34. A rotary filter system according to any one of Claims 1 to 33, **characterised in**
**that** the filter fabric (138g) is a metal wire fabric which is welded to a support frame (138a).

35. A rotary filter system according to any one of Claims 1 to 34, **characterised in**
**that** for the at least partial exposure of the filter rotor (212,312) the filter housing (210,310) is displaceable relative to the filter rotor (212,312) in the direction of the axis of rotation (A).

36. A rotary filter system according to Claim 35,
**characterised in**
**that** the filter housing (210,310) is guided displaceably on a stationary displacement framework (327).

37. A rotary filter system according to any one of Claims 1 to 36, **characterised in**
**that** cleansing nozzles (119) are provided in the vicinity of working components in need of cleansing, which nozzles are connected to a supply of cleansing fluid.

38. A rotary filter system according to any one of Claims 1 to 37, **characterised in**
**that** a filter cake ejection zone (Z4) is provided in the lowermost region of the housing casing (114).

## Revendications

1. Dispositif de filtre rotatif, comprenant
un boîtier de filtre (110, 210, 310) avec une unité enveloppe de boîtier (114),
un rotor de filtre (112, 212, 312) tournant autour d'un axe de rotor (A), reçu à l'intérieur du boîtier de filtre (110, 210, 310), avec une unité enveloppe de rotor (128),
un espace intermédiaire (130) entre l'unité enveloppe de rotor (128) et l'unité enveloppe de boîtier (114),
l'unité enveloppe de rotor (128) présentant une pluralité de cellules filtrantes (136', 136") ou de groupes de cellules filtrantes (136) se suivant les uns les autres dans le sens périphérique,
dans les cellules filtrantes (136', 136") individuelles, respectivement un espace d'amenée (166) s'ouvrant vers l'espace intermédiaire (130) étant séparé en outre d'un système de conduite d'évacuation tournant avec le rotor de filtre (112, 212, 312) par un moyen filtrant (138), en aval duquel système est placé de son côté un système de conduite d'évacuation stationnaire par le biais d'un module de raccordement rotatif (146, 246, 346),
l'espace intermédiaire (130) étant divisé en outre par des moyens de séparation de zone (132) en une pluralité de zones intermédiaires (Z1, Z2, Z3, Z4) se suivant les unes les autres dans le sens périphérique, qui lors de la rotation du rotor de filtre (112, 212, 312) entrent en contact les unes après les autres avec différentes cellules filtrantes (136', 136") ou groupes de cellules filtrantes (136) et communiquent au moins en partie avec un système de conduite d'amenée stationnaire, de sorte qu'au moins une conduite d'amenée stationnaire du système de conduite d'amenée stationnaire communique par le biais d'une zone intermédiaire (130) stationnaire qui lui est associée et par le biais de respectivement au moins une conduite d'évacuation (142, 242) rotative du système de conduite d'évacuation rotatif associée respectivement aux cellules filtrantes (136', 136") ou groupes de cellules filtrantes (136) passant les uns après les autres devant cette zone intermédiaire (130) et aux cellules filtrantes (136', 136") ou groupes de cellules filtrantes (136) individuels, avec une conduite d'évacuation (152) stationnaire du système de conduite d'évacuation stationnaire associée à cette conduite d'amenée,
le rotor de filtre (112, 212, 312) étant logé en outre par un palier de rotor (122, 222, 322) et ce palier de rotor (122, 222, 322) étant supporté de manière stationnaire par un support de palier de rotor (225, 325),
le rotor de filtre (112, 212, 312) pouvant être entraîné en outre par un moteur d'entraînement (154b, 254b) par le biais d'une unité de transmission (154, 254, 354), laquelle présente un organe de sortie (154d, 254d) agencé de manière essentiellement coaxiale par rapport au rotor de filtre (112, 212, 312) et relié au rotor de filtre (112, 212, 312) pour la rotation commune autour de l'axe de rotor (A),
**caractérisé par**
au moins un des deux groupes de caractéristiques :
a) l'organe de sortie (154d, 254d) est logé dans un palier supplémentaire, appelé ci-après « palier de l'organe de sortie », qui est supporté de manière stationnaire par un support de palier de l'organe de sortie (111, 211, 311) séparé du support de palier de rotor (225, 325) ;
b) l'organe de sortie (154d, 254d) est entraîné par un groupe de roues menantes, qui sont réparties sur la périphérie de l'organe de sortie (154d, 254d), de telle sorte que les composantes radiales des efforts transmis par ces roues menantes à l'organe de sortie (154d, 254d) s'annulent au moins en partie.

2. Dispositif de filtre rotatif selon la revendication 1,
**caractérisé en ce que**
le palier de rotor (222, 322) est supporté au moyen du support de palier de rotor (225, 325) et le palier de l'organe de sortie au moyen du support de palier de l'organe de sortie (211, 311) sur une fondation ou un bâti (213, 313) commun.

3. Dispositif de filtre rotatif selon la revendication 1 ou 2,
**caractérisé en ce que**
l'unité de transmission (154, 254, 354) comprend un carter de transmission (154a, 254a, 354a), dans lequel l'organe de sortie de la transmission (154d, 254d) est également logé et **en ce que** ce carter de transmission (154a, 254a, 354a) est supporté de manière stationnaire par un support de carter de transmission (111, 211, 311).

4. Dispositif de filtre rotatif selon l'une quelconque des revendications 1 à 3,
**caractérisé en ce que**
l'unité de transmission (154, 254, 354) comprend au moins un étage de transmission planétaire (154) et **en ce que** l'organe de sortie de la transmission (154d, 254d) appartient à l'étage de transmission planétaire (154).

5. Dispositif de filtre rotatif selon l'une quelconque des revendications 1 à 4,
**caractérisé en ce que**
le palier de rotor (122, 222, 322) est fixé au moins en partie sur le carter de transmission (154a, 254a, 354a) et est supporté de manière stationnaire au moyen du carter de transmission (154a, 254a, 354a).

6. Dispositif de filtre rotatif selon l'une quelconque des revendications 1 à 4,
**caractérisé en ce que** le palier de rotor (122, 222, 322) est supporté par un support de palier de rotor (225, 325) qui libère pour l'essentiel le boîtier de filtre (110, 210, 310) des forces d'appui.

7. Dispositif de filtre rotatif selon l'une quelconque des revendications 1 à 6,
**caractérisé en ce que**
le palier de rotor (122) présente respectivement un point d'appui dans des zones d'extrémité du boîtier de filtre (110) espacées le long de l'axe de rotor.

8. Dispositif de filtre rotatif selon l'une quelconque des revendications 1 à 6,
**caractérisé en ce que**
le palier de rotor (222, 322) se limite à la zone d'extrémité du boîtier de filtre (210, 310) proche de l'unité de transmission (254, 354).

9. Dispositif de filtre rotatif selon l'une quelconque des revendications 1 à 8,
**caractérisé en ce que**
le palier de rotor (122, 222, 322) présente au moins un roulement ou au moins un groupe de roulements.

10. Dispositif de filtre rotatif selon l'une quelconque des revendications 1 à 9,
**caractérisé en ce que**
l'organe de sortie (154d, 254d) de l'unité de transmission (254, 354) est relié au rotor de filtre (212, 312) par le biais d'un accouplement de compensation (157, 257) flexible au moins dans le sens orthogonal à l'axe de rotor (A).

11. Dispositif de filtre rotatif selon l'une quelconque des revendications 1 à 10,
**caractérisé en ce que**
le module de raccordement rotatif (146, 246, 346) est agencé dans le sens de l'axe de rotor (A) entre le boîtier de filtre (110, 210, 310) et le palier de l'organe de sortie.

12. Dispositif de filtre rotatif selon la revendication 11,
**caractérisé en ce**
**que** le module de raccordement rotatif (146, 246, 346) est agencé sur le côté, éloigné du boîtier de filtre, d'un point d'appui de rotor du palier de rotor (122, 322, 322).

13. Dispositif de filtre rotatif selon l'une quelconque des revendications 1 à 12,
**caractérisé en ce que**
le support du boîtier de filtre (118, 218) comprend au moins dans une zone d'extrémité du boîtier de filtre (110, 210), une pluralité de points d'appui (118a, 218a) répartis de manière à peu près uniforme sur la périphérie du boîtier de filtre (110, 210).

14. Dispositif de filtre rotatif selon l'une quelconque des revendications 1 à 13,
**caractérisé en ce que**
des moyens de compensation (118d) sont associés au moins à une partie des points d'appui (118a, 218a) pour compenser les changements de diamètre de l'unité enveloppe de boîtier (114).

15. Dispositif de filtre rotatif selon la revendication 14,
**caractérisé en ce que**
respectivement une colonne d'appui (118) ou un support d'appui pour le boîtier de filtre (210, 310) sont prévus au niveau de deux points d'appui (118a, 218a) espacés le long d'une ligne diamétrale horizontale D.

16. Dispositif de filtre rotatif selon l'une quelconque des revendications 1 à 15, **caractérisé en ce que**
le support du boîtier de filtre (118, 218) présente des moyens de compensation (118g, 118h) pour les changements de longueur du boîtier de filtre (210, 310) dans le sens de l'axe de rotor (A).

17. Dispositif de filtre rotatif selon l'une quelconque des revendications 1 à 16,
**caractérisé en ce que**
l'espace intermédiaire (130) entre l'unité enveloppe de rotor (128) et l'unité enveloppe de boîtier (114) peut être étanché à proximité d'au moins une extrémité axiale de ces unités par un module d'étanchéification (134, 234), qui peut être amené par un tore (134f) gonflable à l'aide d'un fluide sous pression en contact étanche avec une surface d'étanchéité (134i, 134k) d'au moins une des deux unités (114, 128).

18. Dispositif de filtre rotatif selon la revendication 17,
**caractérisé en ce que**
le module d'étanchéification (134, 234) est relié de manière stationnaire à l'unité enveloppe de boîtier (114) et peut être pressé contre une surface d'étanchéité (134i) tournant avec l'unité enveloppe de rotor (128).

19. Dispositif de filtre rotatif selon la revendication 18,
**caractérisé en ce que**
le module d'étanchéification (134, 234) comprend un profil en forme de gouttière à section transversale essentiellement en forme de U, qui est fixé par rapport à l'unité enveloppe de boîtier (114) avec une première branche en U (134c), peut être pressé de manière étanche contre la surface d'étanchéité (134i) de l'unité enveloppe de rotor (128) avec une deuxième branche en U (134d) et reçoit un corps gonflable (134f) torique entre les deux branches en U (134c, 134d), lequel est agencé de manière stationnaire au niveau de l'unité enveloppe de boîtier (114) et est relié à une source de fluide sous pression.

20. Dispositif de filtre rotatif selon l'une quelconque des revendications 17 à 19,
**caractérisé en ce que**
le module d'étanchéification (134, 234) est monté sur une bague d'extrémité (116) d'un bâti à peu près cylindrique du boîtier de filtre (110, 210, 310).

21. Dispositif de filtre rotatif selon l'une quelconque des revendications 1 à 20,
**caractérisé en ce que**
le boîtier de filtre (110, 120, 310) comprend un cadre d'ossature (116 - 110a) à peu près cylindrique avec au moins deux bagues d'ossature (116) terminales et des tiges d'ossature (110a) s'étendant entre les bagues d'ossature (116) parallèlement à l'axe de rotation (A), ce cadre d'ossature (116 - 110a) formant une structure de base de l'unité enveloppe de boîtier (114) et des pièces intercalaires pouvant être insérées sous forme de support d'éléments fonctionnels du dispositif de filtre dans la fenêtre d'ossature (110b) entre des tiges d'ossature (110a) se suivant les unes les autres.

22. Dispositif de filtre rotatif selon la revendication 21,
**caractérisé en ce que**
un couvercle (115a) est associé à au moins une fenêtre d'ossature (110b).

23. Dispositif de filtre selon la revendication 22,
**caractérisé en ce**
**que** le couvercle (115a) est le support d'au moins un élément fonctionnel du dispositif de filtre, qui coopère si on le souhaite avec une pièce intercalaire (117, 132) ou un élément fonctionnel du dispositif de filtre porté par la pièce intercalaire (117, 132).

24. Dispositif de filtre rotatif selon la revendication 22 ou 23,
**caractérisé en ce que**
un couvercle (115a) est limité au recouvrement d'une seule pièce intercalaire (117,132).

25. Dispositif de filtre rotatif selon la revendication 22 ou 23,
**caractérisé en ce que** un couvercle (115a) est réalisé pour le recouvrement de plusieurs pièces intercalaires (117, 132).

26. Dispositif de filtre rotatif selon l'une quelconque des revendications 22 à 25,
**caractérisé en ce que**
un couvercle (115a) peut être fixé sur le cadre d'ossature (116 - 110a) par des moyens d'articulation et/ou de fixation (115b).

27. Dispositif de filtre rotatif selon l'une quelconque des revendications 22 à 25,
**caractérisé en ce que** le couvercle (115a) peut être fixé sur une pièce intercalaire (117,132) par des moyens d'articulation et/ou de fixation (115b).

28. Dispositif de filtre rotatif selon l'une quelconque des revendications 22 à 27,
**caractérisé en ce que**
le couvercle (115a) peut pivoter autour d'un axe de pivotement parallèle à l'axe de rotor (115c).

29. Dispositif de filtre rotatif selon l'une quelconque des revendications 22 à 28,
**caractérisé en ce que** le couvercle (115a) est un élément d'un recouvrement (115) fermé de manière annulaire de l'unité enveloppe de boîtier (114).

30. Dispositif de filtre rotatif selon l'une quelconque des revendications 1 à 29,
**caractérisé en ce que**
l'espace intermédiaire (130), le système de conduite d'amenée, le système de conduite d'évacuation (142, 242) rotatif et le système de conduite d'évacuation stationnaire sont étanchés contre la sortie de milieux du process de filtrage et contre l'entrée de salissures, en particulier de lubrifiant.

31. Dispositif de filtre rotatif selon l'une quelconque des revendications 1 à 30, **caractérisé en ce que**
un moyen de séparation de zone (132) est formé par une plaque de séparation, contre lequel côté éloigné de l'unité enveloppe de rotor (128) s'appuie une membrane (132d) sollicitée par un fluide sous pression ou un coussin (132e) sollicité par un fluide sous pression.

32. Dispositif de filtre rotatif selon l'une quelconque des revendications 1 à 31,
**caractérisé en ce que**
le moyen de séparation de zone (132) comprend une plaque de séparation avec une baguette (132a) en plastique et une couche d'étanchéité (132c) montée sur la baguette (132a).

33. Dispositif de filtre rotatif selon l'une quelconque des revendications 1 à 32,
**caractérisé en ce que**
un moyen filtrant (138) associé à une cellule filtrante (136', 136") comprend un bâti support (138a) étanché au niveau de sa périphérie contre une paroi d'enceinte de cellule (136'a), de préférence un bâti support (138a) en plastique, pour un tissu filtrant (138g), tamis ou similaire, une bague d'étanchéité (138c) utilisée pour l'étanchéification remplissant de manière étanche l'espace intermédiaire entre une surface périphérique du bâti support (138a) et la paroi d'enceinte de cellule (136'a) à peu près jusqu'à la hauteur d'une surface frontale (138e) du bâti support (138a) proche de la périphérie côté produit filtrant.

34. Dispositif de filtre rotatif selon l'une quelconque des revendications 1 à 33,
**caractérisé en ce que**
le tissu filtrant (138g) est une toile métallique qui est soudée au bâti support (138a).

35. Dispositif de filtre rotatif selon l'une quelconque des revendications 1 à 34,
**caractérisé en ce que**
le boîtier de filtre (210, 310) peut être déplacé par rapport au rotor de filtre (212, 312) dans le sens de l'axe de rotation (A) pour dégager au moins en partie le rotor de filtre (212, 312).

36. Dispositif de filtre rotatif selon la revendication 35,
**caractérisé en ce que**
le boîtier de filtre (310) est guidé de manière coulissante sur une cage de déplacement stationnaire (327).

37. Dispositif de filtre rotatif selon l'une quelconque des revendications 1 à 36,
**caractérisé en ce que**
des buses de nettoyage (119), qui sont reliées à une alimentation de fluide de nettoyage sont prévues dans la zone des éléments fonctionnels nécessitant un nettoyage.

38. Dispositif de filtre rotatif selon l'une quelconque des revendications 1 à 37,
**caractérisé en ce que**
une zone d'éjection de gâteau de filtre (Z4) est prévue dans la zone la plus basse de l'enveloppe de boîtier (114).
